# EUROPEAN PATENT APPLICATION

(11) **EP 2 388 748 A1**
(43) Date of publication of application: **23.11.2011**
(21) Application number: 11155747.6
(22) Date of filing: 24.02.2011
(51) Int. Cl.: G06Q 30/00, G06F 9/44, G06F 17/30

(54) **Screen customization supporting system and screen customization supporting method**

(30) Priority: 19.05.2010 JP 2010115409
(71) Applicant: Hitachi Ltd., Tokyo (JP)
(72) Inventor: Morioka, Toshiyuki, Chiyoda-ku, Tokyo 100-8280 (JP); Dempoya, Satoshi, Chiyoda-ku, Tokyo 100-8280 (JP); Koga, Nobuto, Chiyoda-ku, Tokyo 100-8280 (JP); Yoshida, Takahiro, Chiyoda-ku, Tokyo 100-8280 (JP)
(74) Representative: Moore, Graeme Patrick

(57) **Abstract**

A process includes, in performing a process of electronic commerce executed by a user terminal of a party A, generating an output screen with a display setting content of the output screen corresponding to the relevant process, receiving a change instruction for the display setting content from the user terminal displaying the output screen, updating the display setting content related to the output screen in accordance with the change instruction, and storing identification information of the party A and the output screen in the first database in an associated manner, and, in performing a process of electronic commerce executed by a user terminal of one of the party A and a party B in transactional relationship with the party A, setting the transactional data into the output screen in accordance with the identified display setting content with a display setting content of an output screen that corresponds to the process and that is associated with the identification information of the party A, and sending it back to the user terminal of one of the party A and the party B.

## Description

The present invention preferably relates to a screen customization supporting system and a screen customization supporting method and preferably specifically relates to a technique that enables flexible screen customization without individual program development in a multi-tenant environment.

B-to-B electronic commerce is commonly performed in association with the explosive spread of the Internet. In general, business corporations providing an environment for utilization of such electronic commerce provide application software platform functions as services on the Internet. Users utilizing these services can participate in electronic commerce by only preparing an environment for coupling to the Internet. While there is a rapid increase in the number of users of the services because of such easiness of introduction, usage scenes of the users are becoming more diversified. The users with various usage scenes tend to make different requests for an application function, causing a rapid increase in customization requests for application functions. Therefore, in providing an application function as a service, it is preferable (or even urgently needed) to deal with customization for individual users.

Concerning an invention related to such a technique, for example, Japanese Laid-Open Patent Publication No. 2009-37648 proposes a computer and an access management method that provide an environment under which various transactions are electronically executed in an n to m relationship and a third party can execute new service, and that provides an open and secure business media space in which business security is assured.

Further, Japanese Laid-Open Patent Publication No. 2008-40751 proposes an information processor, an information processor method, and a program that support setting of operation attribute of an application program to allow reduction in view definitions and source coding quantity associated with the view definitions.

Existing techniques cannot in general deal with requirements of individual users who wish to customize and use screens, functions, etc. Therefore, in general, program development must be performed for individual users in an existing manner so as to deal with a requirement of each user. Performing such program development may give rise to a drawback in which maintenance efficiency is decreased in service operation in a multi-tenant environment.

An existing technique realizing the creation of an application screen without creating a program by defining screen items and item attributions is a development supporting technique which is related to initial creation of screens, and thus an application user cannot change a screen configuration etc., as needed. Therefore, there is a drawback that a wide variety of application screens corresponding to usage scenes of a user cannot be provided.

Therefore, it is a preferred advantage of some aspects of the invention to provide a technique that enables flexible screen customization without individual program development in a multi-tenant environment.

A screen customization supporting system that is preferably an aspect of the invention and which may solve the above problem is an information processing apparatus that manages display screens presented to parties involved in electronic commerce in an electronic commerce environment, the screen customization supporting system including: a communication unit that communicates with a user terminal through a network, the user terminal capable of being used by each of the parties; a storage unit storing a first database and a second database, the first database containing display setting content data for an output screen outputted to the user terminal in response to each of the processes of the electronic commerce, the second database containing transactional data generated in a process of the electronic commerce; a control unit that executes the processes of: in performing a process of electronic commerce executed by a user terminal of a party A, identifying a display setting content of an output screen corresponding to the process in the first database, retrieving transactional data related to the party A from the second database with respect to the process, setting the transactional data into the output screen in accordance with the identified display setting content to generate output screen data, and sending the output screen data back to the user terminal of the party A, receiving, via the communication unit, a change instruction for the display setting content related to the output screen from the user terminal that is receiving and displaying the output screen data, updating the display setting content related to the output screen in accordance with the change instruction, and storing identification information of the party A and the output screen in the first database in an associated manner, and in performing a process of electronic commerce executed by a user terminal of one of the party A and a party B in transactional relationship with the party A, identifying, in the first database, a display setting content of an output screen that corresponds to the process and that is associated with the identification information of the party A, retrieving transactional data related to the parties from the second database with respect to the process, setting the transactional data into the output screen in accordance with the identified display setting content to generate output screen data, and sending the output screen data back to the user terminal of one of the party A and the party B.

A screen customization supporting method that is preferably an aspect of the present invention is a method capable of being performed by an information processing apparatus having a communication unit that communicates with another terminal, a storage unit storing a first database and a second database, the first database containing display setting content data for an output screen outputted to a user terminal in response to each of the processes of electronic commerce, the second database containing transactional data generated in a process of the electronic commerce, and a control unit , the information processing apparatus being configured to manage display screens presented to parties of the electronic commerce in an electronic commerce environment, the method including: in performing a process of electronic commerce executed by a user terminal of a party A, identifying a display setting content of an output screen corresponding to the process in the first database, retrieving transactional data related to the party A from the second database with respect to the process, setting the transactional data into the output screen in accordance with the identified display setting content to generate output screen data, and sending the output screen data back to the user terminal of the party A, receiving, via the communication unit, a change instruction for the display setting content related to the output screen from the user terminal that is receiving and displaying the output screen data, updating the display setting content for the output screen in accordance with the change instruction, and storing identification information of the party A and the output screen in the first database in an associated manner, and in performing a process of electronic commerce executed by a user terminal of one of the party A and a party B in transactional relationship with the party A, identifying, in the first database, a display setting content of an output screen that corresponds to the process and that is associated with the identification information of the party A, retrieving transactional data related to the parties from the second database with respect to the process, setting the transactional data into the output screen in accordance with the identified display setting contents to generate output screen data, and sending the output screen data back to the user terminal of one of the party A and the party B.

Preferably, according to the present invention, flexible screen customization is enabled without association with individual program development in multi-tenant environment.

### BRIEF DESCRIPTION OF THE DRAWINGS

Fig. 1 is a diagram of a network configuration of an intercompany information exchanging system including a screen customization supporting system.
Fig. 2 is a diagram of a hardware configuration example of a G/W server.
Fig. 3 is a diagram of a hardware configuration example of a web server.
Fig. 4A is a diagram of a data configuration example of user authentication information included in the G/W server.
Fig. 4B is a diagram of a data configuration example of transactional relationship information included in the G/W server.
Fig. 5A is a diagram of a data configuration example of user authentication information included in the web server.
Fig. 5B is a diagram of a data configuration example of transactional relationship information included in the web server.
Fig. 6A is a diagram of a data configuration example 1 included in a data exchange DB server.
Fig. 6B is a diagram of a data configuration example 2 included in the data exchange DB server.
Fig. 6C is a diagram of a data configuration example 3 included in the data exchange DB server.
Fig. 7A is a diagram of a data configuration example 1 included by default in a screen customization definition DB server.
Fig. 7B is a diagram of a data configuration example 2 included by default in the screen customization definition DB server.
Fig. 7C is a diagram of a data configuration example 3 included by default in the screen customization definition DB server.
Fig. 8A is a diagram of a data configuration example 1 included as buyer-specific definition in the screen customization definition DB server.
Fig. 8B is a diagram of a data configuration example 2 included as the buyer-specific definition in the screen customization definition DB server.
Fig. 8C is a diagram of a data configuration example 3 included as the buyer-specific definition in the screen customization definition DB server.
Fig. 9A is a diagram of a data configuration example 1 included as login-ID-specific definition in the screen customization definition DB server.
Fig. 9B is a diagram of a data configuration example 2 included as the login-ID-specific definition in the screen customization definition DB server.
Fig. 10 is a flowchart of a process procedure example 1 of a screen customization supporting method in the present embodiment.
Fig. 11 is a flowchart of a process procedure example 2 of the screen customization supporting method in the present embodiment.
Fig. 12 is a flowchart of a process procedure example 3 of the screen customization supporting method in the present embodiment.
Fig. 13 is a flowchart of a process procedure example 4 of the screen customization supporting method in the present embodiment.
Fig. 14 is a flowchart of a process procedure example 5 of the screen customization supporting method in the present embodiment.
Fig. 15 is a flowchart of a process procedure example 6 of the screen customization supporting method in the present embodiment.
Fig. 16 is a flowchart of a process procedure example 7 of the screen customization supporting method in the present embodiment.
Fig. 17 is a flowchart of a process procedure example 8 of the screen customization supporting method in the present embodiment.
Fig. 18 is a flowchart of a process procedure example 9 of the screen customization supporting method in the present embodiment.
Fig. 19 is a flowchart of a process procedure example 10 of the screen customization supporting method in the present embodiment.
Fig. 20 is a flowchart of a process procedure example 11 of the screen customization supporting method in the present embodiment.
Fig. 21 is a flowchart of a process procedure example 12 of the screen customization supporting method in the present embodiment.
Fig. 22 is a diagram of a screen example 1 in the present embodiment.
Fig. 23 is a diagram of a screen example 2 in the present embodiment.
Fig. 24 is a diagram of a screen example 3 in the present embodiment.
Fig. 25 is a diagram of a screen example 4 in the present embodiment.
Fig. 26 is a diagram of a screen example 5 in the present embodiment.
Fig. 27 is a diagram of a screen example 6 in the present embodiment.
Fig. 28 is a diagram of a screen example 7 in the present embodiment.

### --System Configuration-

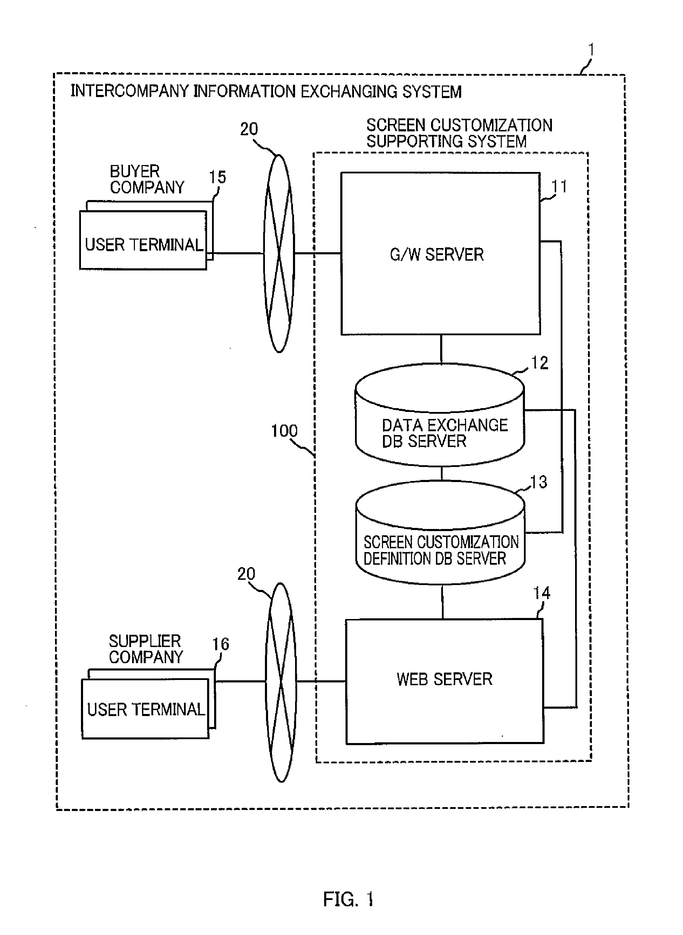

Preferred embodiments preferably of an aspect of the invention will now be described in detail with reference to the drawings. Fig. 1 is a diagram of an exemplary configuration of a screen customization supporting system of the present embodiment. A screen customization supporting system 100 (hereinafter, system 100) depicted in Fig. 1 is a computer system that enables flexible screen customization without individual program development in a multi-tenant environment. The system 100 may be a server apparatus coupled to user terminals over a network, for example.

An intercompany information exchanging system 1 including the system 100 includes, for example, user terminals 15 of (a plurality of) buyer companies placing orders for products and making requests for screen customization; a G/W server 11 that is a counterpart to which the user terminals 15 transmit order information and screen customization information through a network such as the Internet 20; user terminals 16 of supplier companies that accept orders; a web server 14 that is a counterpart to which the user terminals 16 access and make requests for screen data through a network such as the Internet 20; and a data exchange DB server 12 and a screen customization definition DB server 13coupled to the G/W server 11 and the web server 14 by a network.

The system 100 in the present embodiment includes a server group of the G/W server 11, the web server 14, the data exchange DB server 12, and the screen customization definition DB server 13. In the present embodiment, although a system including a plurality of servers is taken as an example, the system 100 may naturally include a single server apparatus.

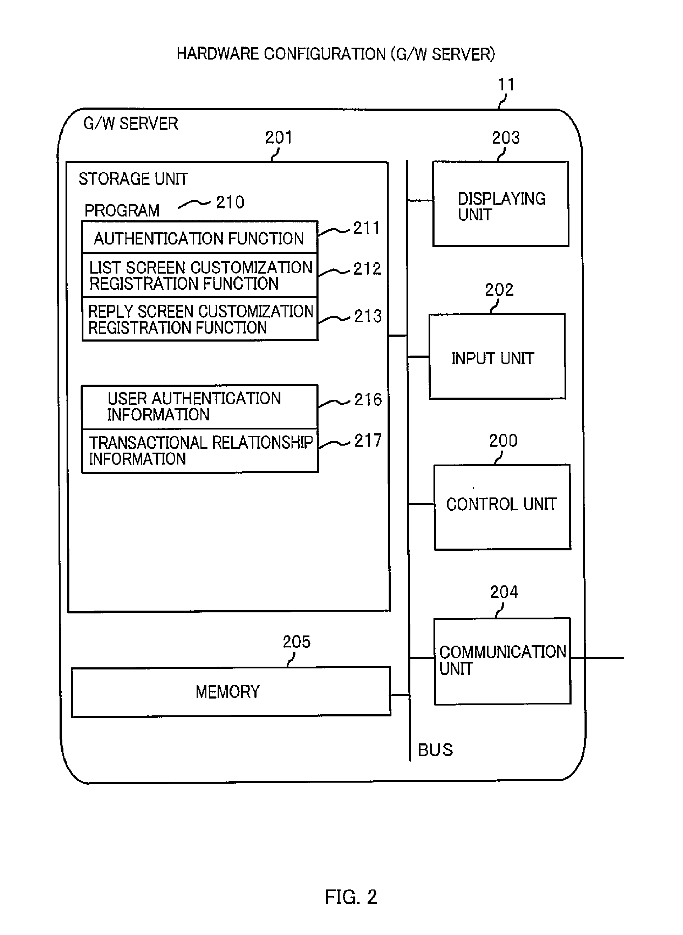

Hardware configurations will be described for the G/W server 11 and the web server 14 that are core sections in the system 100. Fig. 2 is a diagram of an exemplary hardware configuration of the G/W server 11. The G/W server 11 is equipped with a control unit 200 such as a CPU, a storage unit 201 that is a nonvolatile storage device such as a hard disc drive, an input unit 202, a display unit 203, a communication unit 204 that communicates with another terminal coupled to the network, and a memory 205 that is a volatile storage device such as RAM. The units 200 to 205 are coupled through a bus (BUS).

The control unit 200 reads out a program 210 stored in the storage unit 201 to the memory 205 and executes the program to implement functions necessary for processes. The functions implemented by the program 210 include an authentication function 211, a list screen customization registration function 212, and a reply screen customization registration function 213.

User authentication information 216 and transactional relationship information 217 are stored in the storage unit along with the program 210.

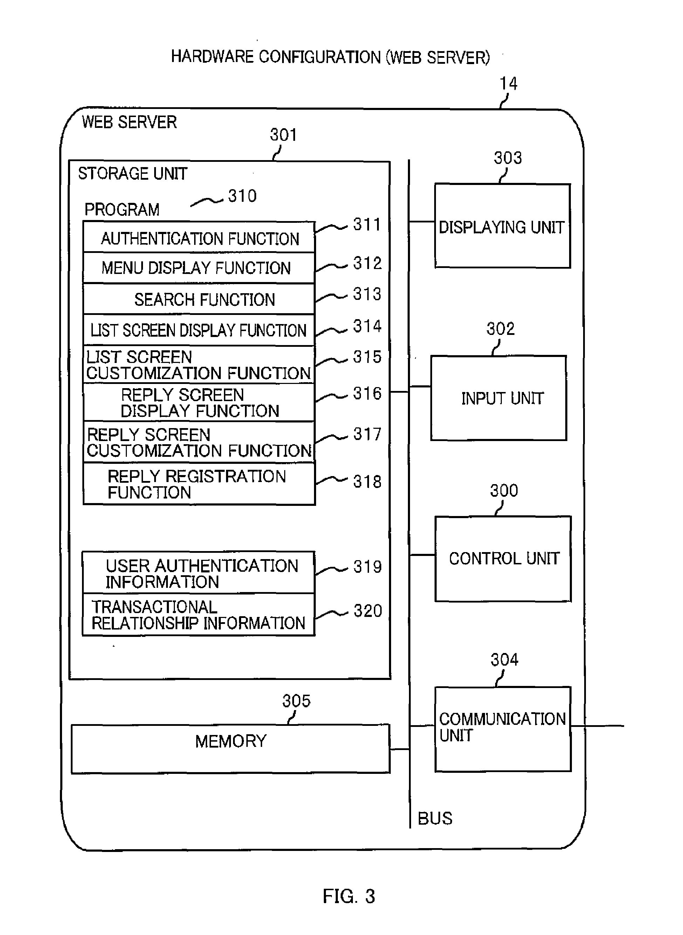

Fig. 3 is a diagram of an exemplary hardware configuration of a web server 14. The web server 14 is equipped with a control unit 300 such as a CPU, a storage unit 301 that is a nonvolatile storage device such as a hard disc drive, an input unit 302, a display unit 303, a communication unit 304 that communicates with another terminal coupled to the network, and a memory 305 that is a volatile storage device such as RAM. The units 300 to 305 are coupled through BUS.

The control unit 300 reads out a program 310 stored in the storage unit 301 to the memory 305 and executes the program to implement functions necessary for processes. The functions implemented by the program 310 include an authentication function 311, a menu display function 312, a search function 313, a list screen display function 314, a list screen customization function 315, a reply screen display function 316, a reply screen customization function 317, and a reply registration function 318.

User authentication information 319 and transactional relationship information 320 are stored in the storage unit 301 along with the program 310.

The data exchange DB server 12 is a server that has a second database storing transactional data generated in a process of electronic commerce between the user terminals 15 of the buyer companies and the user terminals 16 of the supplier companies. The hardware configuration of this server is a configuration of a typical server apparatus as is the case with the G/W server 11 and the web server 14 described above (therefore not depicted). In the present embodiment, the second database may be an order information DB 121 that contains order information from the user terminals 15 of the buyer companies and a delivery date reply information DB 122 that stores delivery date reply information returned in response to orders by the user terminals 16 of the supplier companies. The data exchange DB server 12 also has a screen ID list DB 123. Data configuration examples of these databases will be described later.

The screen customization definition DB server 13 is a server that has a first database containing data of display setting contents concerning an output screen that is outputted to the user terminals in accordance with processes in electronic commerce. The hardware configuration of this server is a configuration of a typical server apparatus as is the case with the G/W server 11 and the web server 14 described above (therefore not depicted). In the present embodiment, the first database be include a default item definition master DB 131, a default list definition master DB 132, a default reply definition master DB 133, a buyer-specific item definition master DB 134, a buyer-specific list definition master DB 135, a buyer-specific reply definition master DB 136, a login-ID-specific list definition master DB 137, and a login-ID-specific reply definition master DB 138. Data configuration examples of these databases will be described later.

On the other hand, the user terminals 15, 16 are computer terminals accessible to the system 100 through the network such as the Internet 20 and the hardware configuration includes a control unit, a storage unit, a memory, a communication unit, an input unit that receives an input from a user, and an output unit such as a display device that outputs a process result.

### --Configuration Examples of Databases-

Data configuration examples will be described for the databases stored in the storage units of the servers in the system 100 of the present embodiment. It is assumed that the servers 11 to 14 are capable of using the databases stored in each other' s storage unit via the network

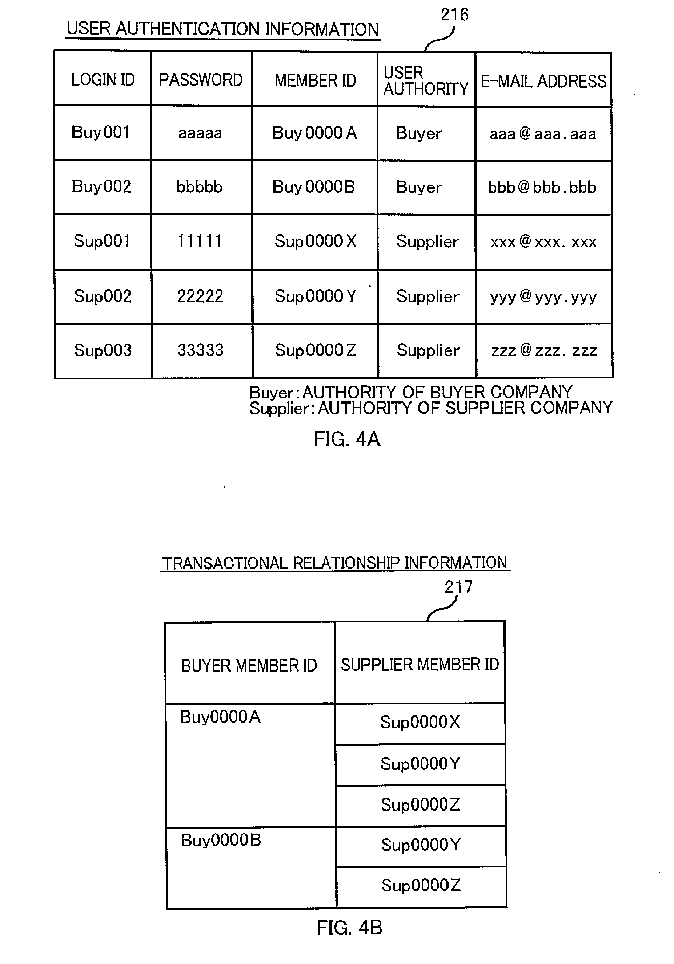

Fig. 4A is a diagram of a data configuration example of the user authentication information 216 contained in the G/W server 11 and Fig. 4B is a diagram of a data configuration example of the transactional relationship information 217 contained in the G/W server 11. The user authentication information 216 and the transactional relationship information 217 define in advance the information related to users accessible to the G/W server 11 of the intercompany information exchanging system 1.

The user authentication information 216 is a group of records in which data such as a password, a member ID, a user authority, and an e-mail address are correlated using a login ID of each user as a key. The transactional relationship information 217 is a group of records in which member IDs of supplier companies registered as suppliers by a buyer company are correlated using a member ID of each buyer company as a key.

For example, it is assumed that a buyer company having a member ID "Buy0000A" transmits screen customization information (=display setting contents of an output screen) from the user terminal 15 to the G/W server 11. In this case, the G/W server 11 checks the data having a login ID and a password related to the member ID "Buy0000A" sent from the user terminal 15 along with the customization information against the user authentication information 216 depicted in Fig. 4A to perform user authentication by determining whether the login ID "Buy001" and the password "aaaaa" related to the member ID "Buy0000A" match with the data of the corresponding record in the user authentication information 216 and whether a user authority (="buy") indicated by the member ID corresponds to the data of the corresponding record.

If the user authentication of the buyer company "Buy0000A" is successful, the G/W server 11 identifies member IDs "Sup0000X", "Sup0000Y", and "Sup0000Z" of supplier companies linked to the buyer company based on the member ID of "Buy0000A" and the transactional relationship information 217. The screen customization is applied to the output screens of the user terminals 16 of the identified supplier companies. Therefore, when a buyer company attempts to customize a screen, a range of application of the screen customization is a range of supplier companies correlated with the buyer company in the transactional relationship information 217.

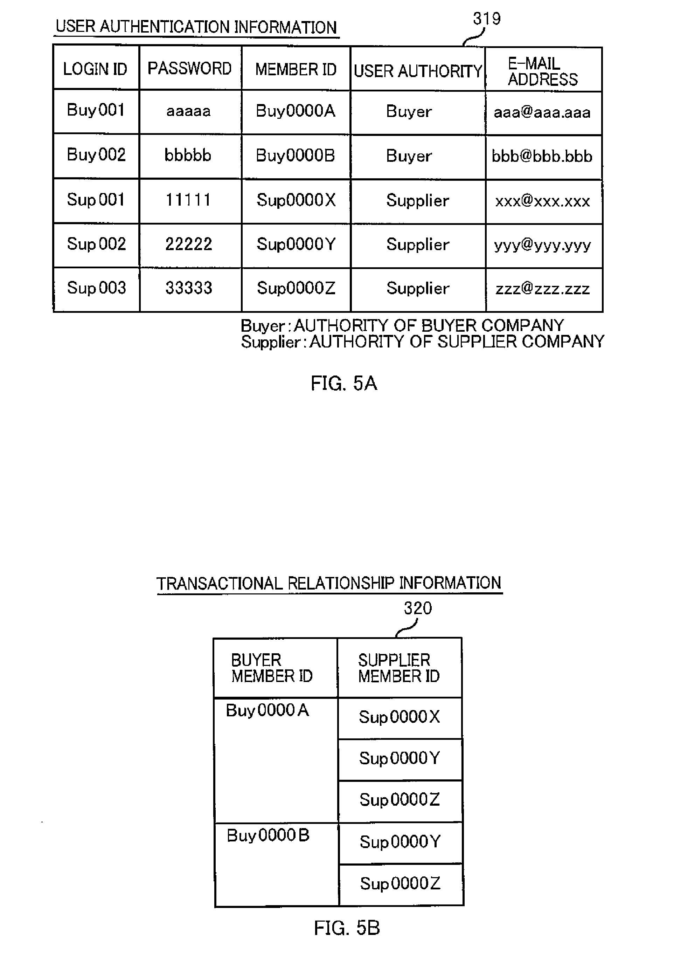

Fig. 5A is a diagram of a data configuration example of the user authentication information 319 contained in the web server 14 and Fig. 5B is a diagram of a data configuration example of the transactional relationship information 320 contained in the web server 14. The user authentication information 319 and the transactional relationship information 320 define in advance the information related to users accessible to the web server 14 of the intercompany information exchanging system 1.

The user authentication information 319 is a group of records in which data such as a password, a member ID, a user authority, and an e-mail address are correlated using a login ID of each user as a key. The transactional relationship information 320 is a group of records in which member IDs of supplier companies registered as suppliers by a buyer company are correlated using a member ID of each buyer company as a key.

For example, it is assumed that a supplier company having a member ID "Sup0000Y" transmits an information request from the user terminal 16 to the web server 14. In this case, the web server 14 checks the data having a login ID and a password related to the member ID "Sup0000Y" sent from the user terminal 16 along with the information request against the user authentication information 319 depicted in Fig. 5A to perform user authentication by determining whether the login ID "Sup002" and the password "22222" related to the member ID "Sup0000Y" match with the data of the corresponding record in the user authentication information 319 and whether a user authority (="sup") indicated by the member ID corresponds to the data of the corresponding record.

If the user authentication of the supplier company "Sup0000Y" is successful, the web server 14 identifies member IDs "Buy0000A" and "Buy0000B" of buyer companies linked to the supplier company based on the member ID "Sup0000Y" and the transactional relationship information 320. In a system having participants in an n-to-m relationship, i.e., in a multi-tenant type system like the intercompany information exchanging system 1 of the present embodiment, a supplier company is capable of referring to information = order information, etc., of buyer companies within a range set to the supplier company in the transactional relationship information 320.

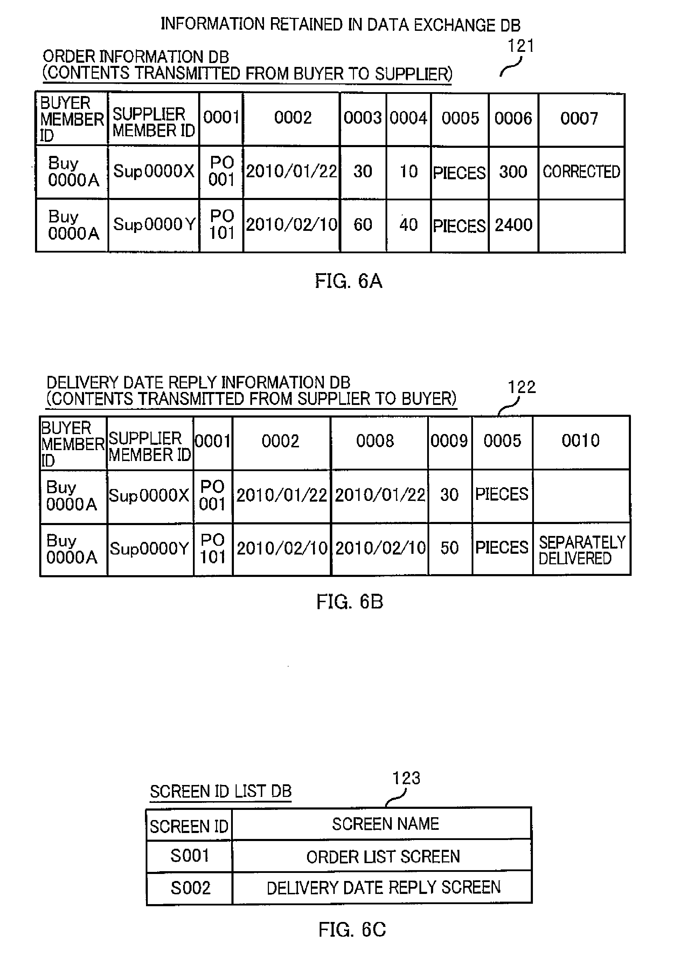

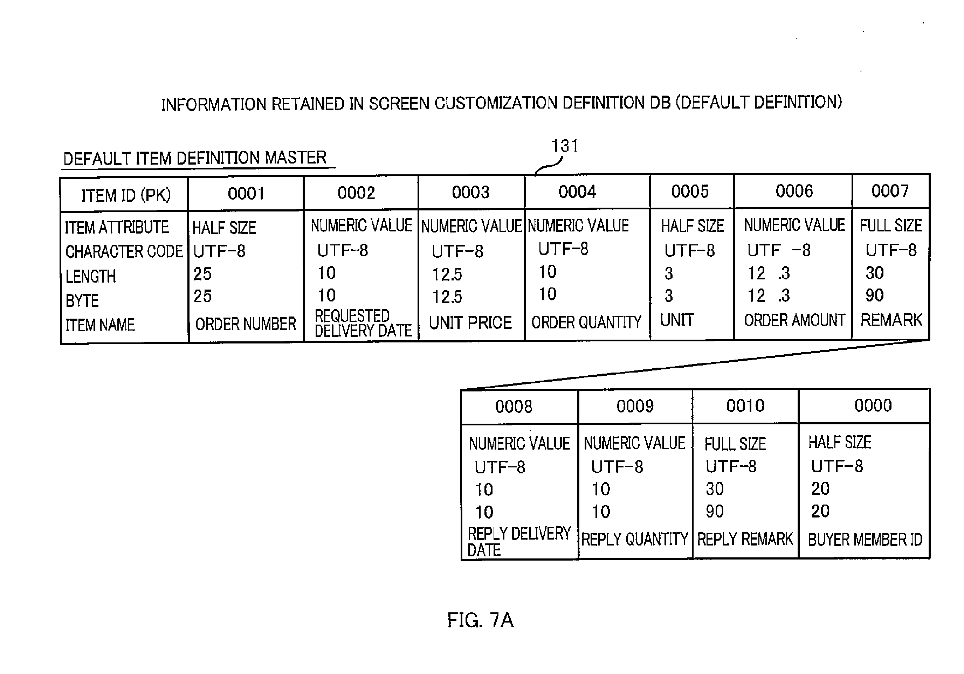

Fig. 6A is a diagram of a data configuration example 1 of data contained in the data exchange DB server 12; Fig. 6B is a diagram of a data configuration example 2 of data contained in the data exchange DB server 12; and Fig. 6C is a diagram of a data configuration example 3 of data contained in the data exchange DB server 12. The order information DB 121 depicted in Fig. 6A is a database that contains order information transmitted from the user terminals 15 of the buyer company. The order information DB 121 is a group of records in which a member ID of a supplier company that is an order destination and data of items from "0001" to "0007" (from order number to remarks) are correlated with a key being a member ID of a buyer company that has placed an order. Attributes of information corresponding to the items will be described later with reference to Fig. 7A. The order information transmitted from the user terminal 15 of the buyer company is received by the G/W server 11 and is stored in the order information DB 121 in the data exchange DB server 12.

The delivery date reply information DB 122 depicted in Fig. 6B is a database that contains delivery date reply information returned by the supplier companies to the buyer company. The delivery date reply information DB 122 is a group of records in which a member ID of a supplier company that has returned a delivery date reply and data of items (from order number to reply remarks) are correlated using a member ID of a buyer company that places an order as a key. Attributes of information corresponding to the items will be described later with reference to Fig. 7A. The user terminal 16 of the supplier company accesses the web server 14 to acquire a reply screen and returns a delivery date reply to the user terminal 15 of the buyer company through this reply screen. The delivery date reply information is stored into the data exchange DB server 12 by the web server 14.

The screen ID list DB 123 depicted in Fig. 6C is a database that contains information for identifying an output screen between the data exchange DB server 12 and the screen customization definition DB server 13. The screen ID list DB 123 forms a list that correlates screen IDs with screen names for screens provided by the intercompany information exchanging system 1.

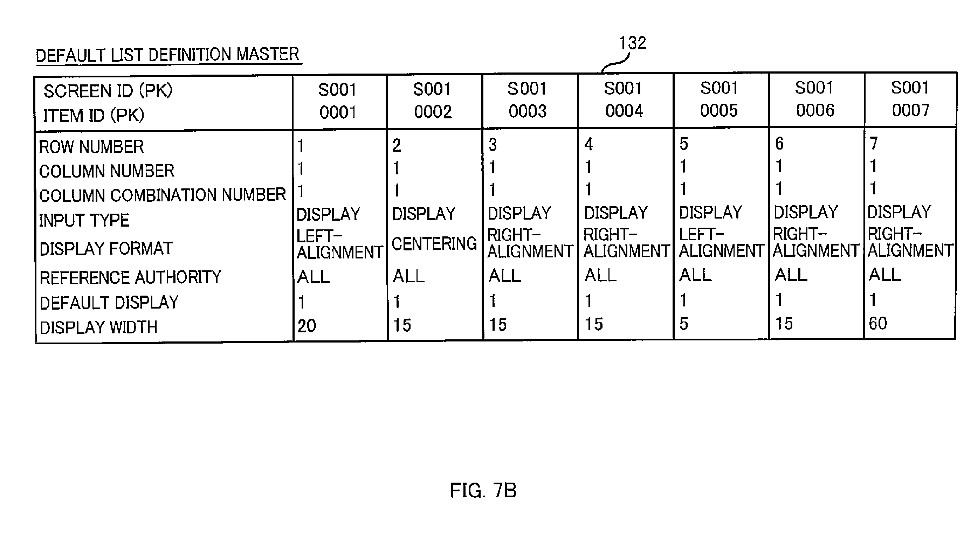

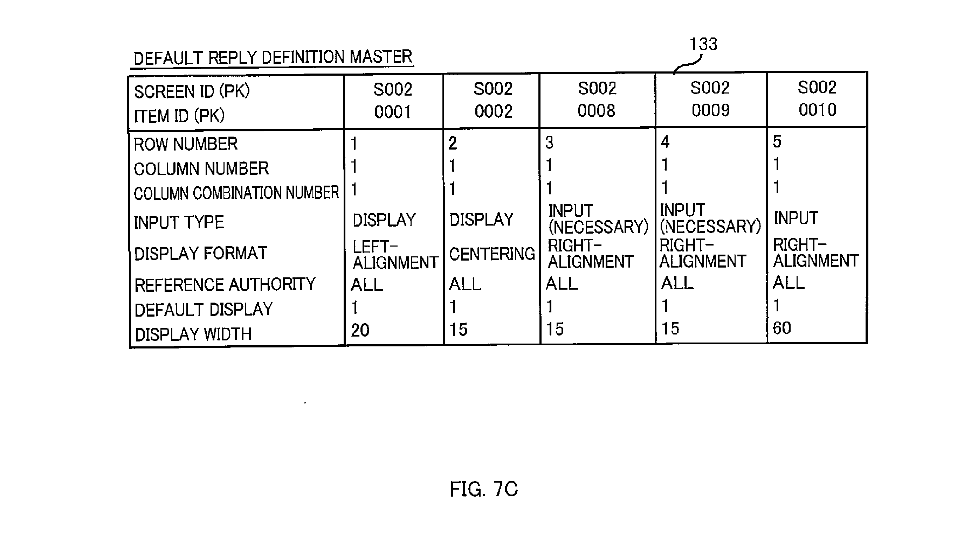

Fig. 7A is a diagram of data configuration example 1 of data contained in the screen customization definition DB server 13 by default; Fig. 7B is a diagram of data configuration example 2 of data contained in the screen customization definition DB server 13 by default; and Fig. 7C is a diagram of data configuration example 3 of data contained in the screen customization definition DB server 13 by default.

A database depicted as the exemplary data configuration of Fig. 7A is the default item definition master DB 131, which is a master that defines, among the display setting contents of output screens employed in a case where no screen customization is performed by users of the buyer companies and the supplier companies, setting contents related to items to be displayed on a list screen of order information. The items to be displayed which are defined here correspond to the items (from "0001") in the order information DB 121 depicted in Fig. 6A. The default item definition master DB 131 can be considered as a database that stores definition of items used in each of the screens.

For example, for an item ID "00001", the default item definition master DB 131 defines an "ITEM NAME" as "order number", an "ITEM ATTRIBUTE" as "HALF SIZE", a settable "CHARACTER CODE" as "UTF-8", an available character "LENGTH" and an available "BYTE LENGTH" as "25". The same definition is applied to all the screens utilizing the item ID "0001" (= screens to which the data of the corresponding items in the order information DB 121 and the delivery date reply information DB 122 are applied). For example, if "P0001" is set as the item ID "00001" in the order information transmitted by the user terminal 15 of the buyer company, "P0001" is displayed as the item name "ORDER NUMBER" in the screens including this order information as a constituent element.

A database depicted in the data configuration example of Fig. 7B is the default list definition master DB 132, which is a master that defines display positions, formats, sizes, etc., of items displayed on the output screens among the display setting contents of output screens employed in a case where no screen customization is performed by users of the buyer companies and the supplier companies.

For example, in the default list definition master DB 132 of Fig. 7B, a screen ID "S001" represents an order information list screen. For each of the items "0001" to "0007" displayed by default on the order information list screen, "ROW NUMBER" defines an arrangement order on the screen; "COLUMN NUMBER" defines definition of multicolumn format; "COLUMN COMBINATION NUMBER" defines whether multicolumn is used for each line in the multicolumn display; "DISPLAY FORMAT" defines "left-alignment", "right-alignment", or "centering" of text; "REFERENCE AUTHORITY" defines users allowed to refer to the item; "DEFAULT DISPLAY" defines whether the corresponding item is displayed by default; and "DISPLAY WIDTH" defines a display size.

The items are displayed from the right hand side of the screen in the ascending order of the "ROW NUMBER". For example, in a case where an order information list is to be displayed in two columns, the "COLUMN NUMBER" is set to "2". The "DEFAULT DISPLAY" is set to "1" in a case where the corresponding item is to be displayed by default and is set to "2" in a case where the corresponding item is not to be displayed by default and is to be arbitrarily displayed.

A database depicted in the data configuration example of Fig. 7C is the default reply definition master DB 133, which is a master that defines the setting contents related to items to be displayed on a screen of delivery date reply information among the display setting contents of output screens employed in a case where no screen customization is performed by users of the buyer companies and the supplier companies. The items to be displayed that are defined here in this database correspond to the items ("0001", "0002", "0008", "0009", and "0010") in the delivery date reply information DB 122 depicted in Fig. 6B. The default reply definition master DB 133 can be considered as a database that contains definition of items used in the screens. The default reply definition master DB 133 has a similar data configuration to that of the default list definition master DB 132. A difference is that "INPUT TYPE" defines either "display" or "input (necessary)".

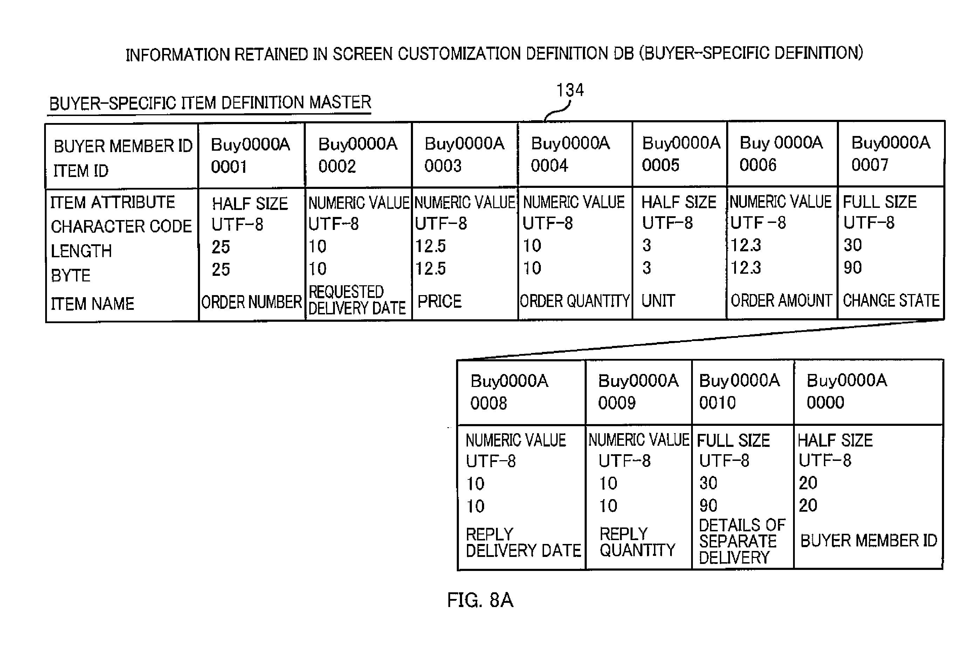

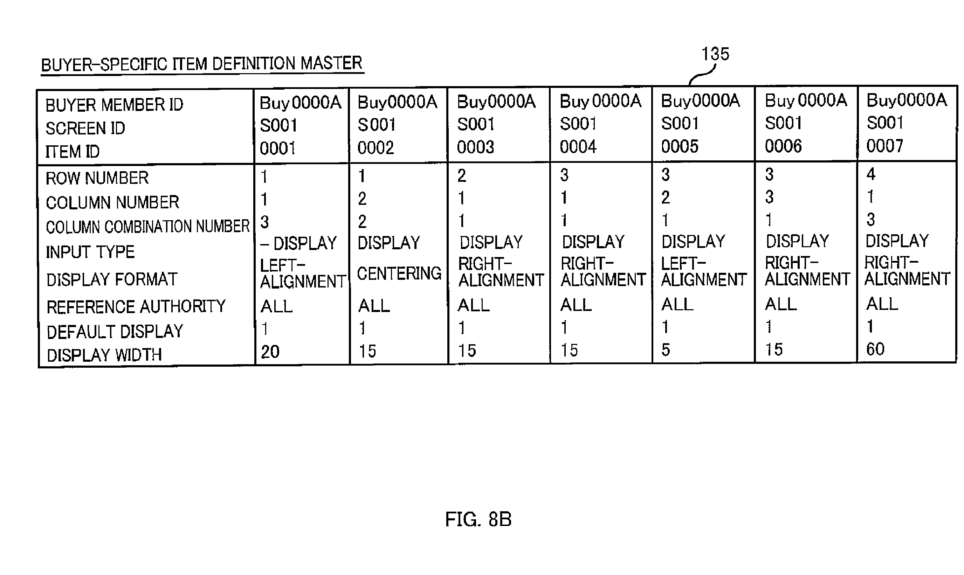

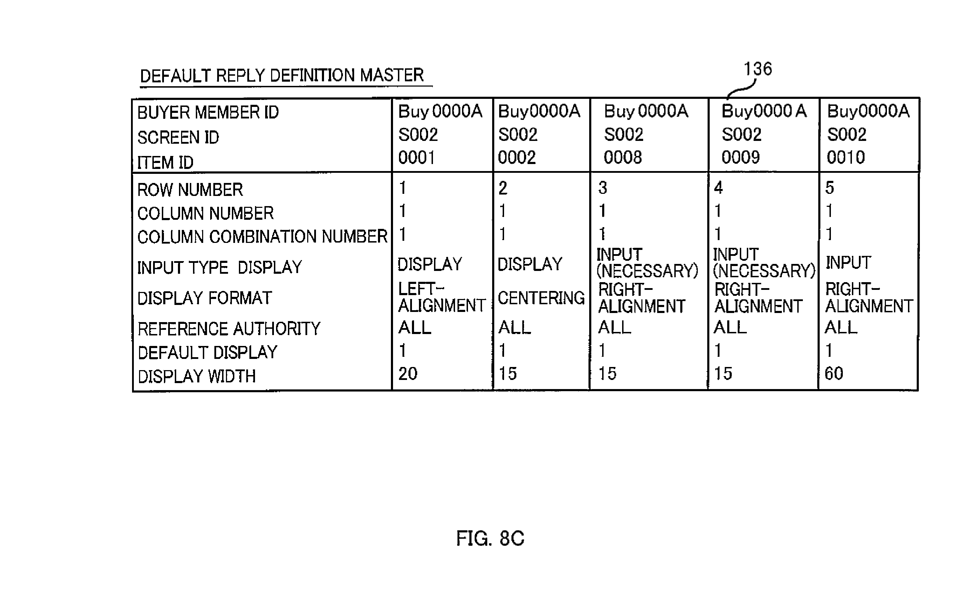

Fig. 8A is a diagram of data configuration example 1 (the buyer-specific item definition master DB 134) of data contained in the screen customization definition DB server 13 as a buyer-specific definition; Fig. 8B is a diagram of data configuration example 2 (the buyer-specific list definition master DB 135) of data contained in the screen customization definition DB server 13 as the buyer-specific definition; and Fig. 8C is a diagram of data configuration example 3 (the buyer-specific reply definition master DB 136) of data contained in the screen customization definition DB server 13 the buyer-specific definition.

Each of the databases 134 to 136 depicted in Figs. 8A to 8C is a master stored in the screen customization definition DB server 13 in a case of the screen customization by a buyer company. The data configuration is the same as each of the default definition master DBs depicted in Figs. 7A to 7C except that the member ID of the buyer company performing the screen customization on the corresponding screen is added. On the user terminals 16 of a supplier company (= identified in the transactional relationship information 217, 320) in a transactional relationship with a corresponding buyer company having a member ID set in the databases 134 to 136, a screen specified by the corresponding buyer company (= a screen with the display setting contents being customized) can be referenced.

A member ID of a buyer company set in the buyer-specific definition master of each of the databases 134 to 136 is a member ID for authentication that is used when the user terminals 15 of the buyer company transmit the screen customization information to the G/W server 11, and the G/W server 11 acquires and sets this member ID in the relevant databases (the buyer-specific item definition master DB 134, the buyer-specific list definition master DB 135, and the buyer-specific reply definition master DB 136) of the screen customization definition DB server 13.

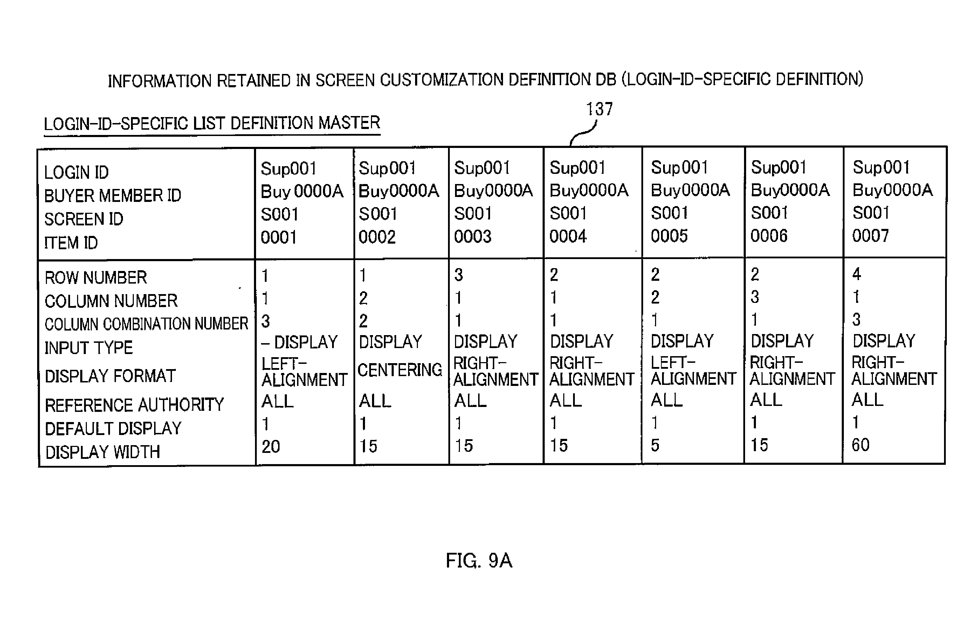

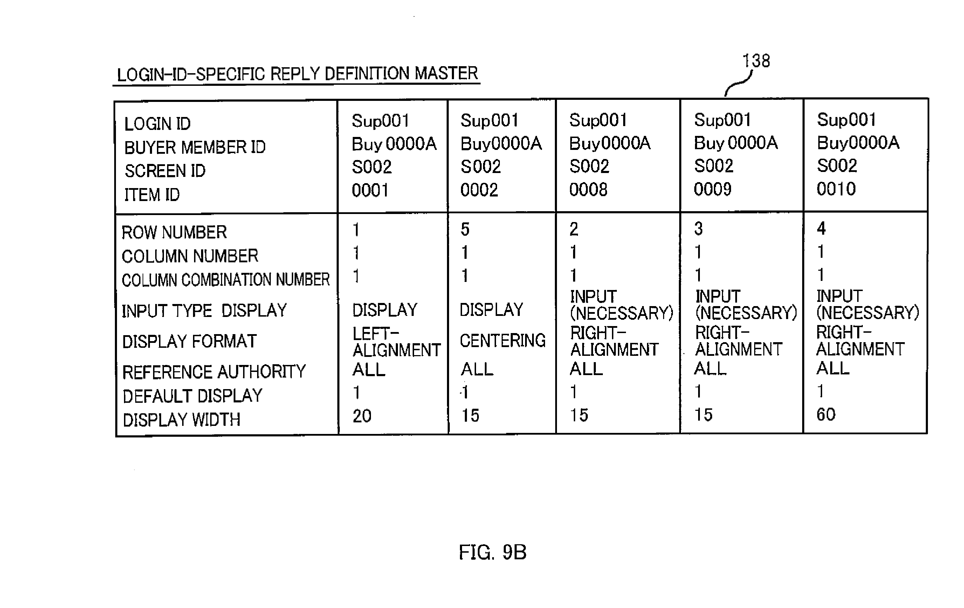

Fig. 9A is a diagram of data configuration example 1 of data (the login-ID-specific list definition master DB 137) contained in the screen customization definition DB server 13 as login-ID-specific definition and Fig. 9B is a diagram of data configuration example 2 (the login-ID-specific reply definition master DB 138) contained in the screen customization definition DB server 13 as the login-ID-specific definition.

Each of the databases 137 and 138 depicted in Figs. 9A and 9B is a master stored in the screen customization definition DB server 13 in a case where a supplier company has performed the screen customization. The data configurations are the same as that of the default definition master DBs depicted in Figs. 7B and 7C except that the login ID of the supplier company performing the screen customization on the corresponding screen is added.

A login ID of a supplier company set in the login-ID-specific definition masters of the databases 137 and 138 is a login ID for authentication when the user terminals 16 of the supplier company transmit a screen customization request to the web server 14, and the web server 114 acquires and sets this login ID in the relevant databases (the login-ID-specific list definition master DB 137 and the login-ID-specific reply definition master DB 138) of the screen customization definition DB server 13.

### --Process Procedure 1-

Actual procedures of the screen customization supporting method in the present embodiment will hereinafter be described with reference to the drawings. Various operations corresponding to the screen customization supporting method described below are implemented by the program read out to the memory and executed by each of the control units of the servers in the system 100. This program includes codes for causing various operations described below.

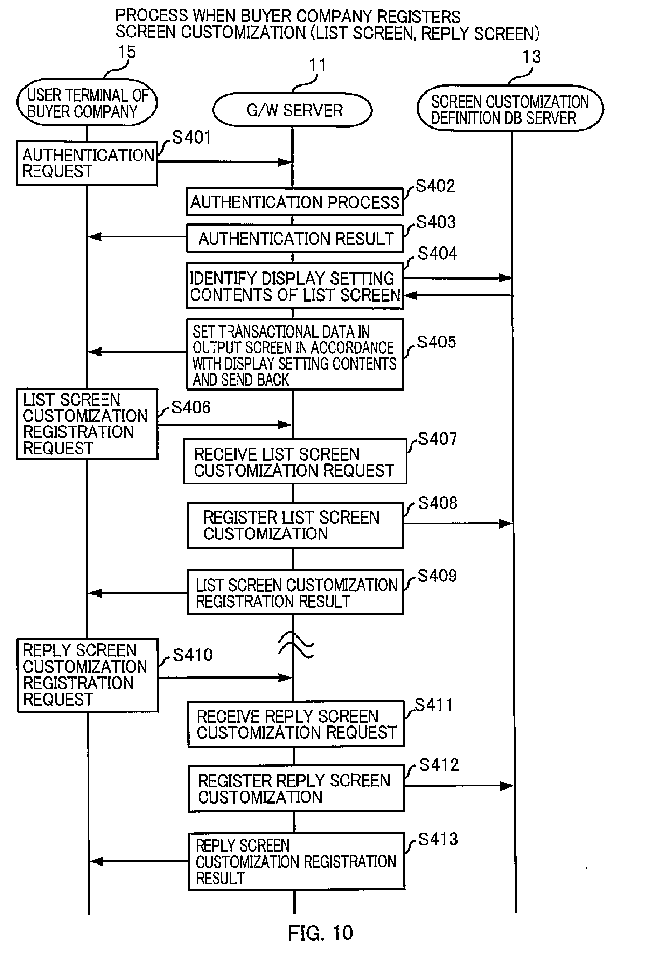

Fig. 10 is a flowchart of a process procedure example 1 of the screen customization supporting method in the present embodiment. A general description will be made of a customization process of an output screen of an order information list (hereinafter, a list screen) and an output screen of delivery date reply information (hereinafter, a reply screen), which is performed between the user terminal 15 of the buyer company, the G/W server 11 and the screen customization definition DB server 13.

In this case, prior to a browse request of the list screen or the reply screen, the user terminal 15 of the buyer company transmits an authentication request including, for example, a member ID, a login ID, and a password, to the G/W server 11 (S401). Upon receiving this request, the G/W server 11 uses the authentication function 211 to check the authentication request against the user authentication information 216 to perform a user authentication process (S402) and returns an authentication result thereof to the user terminal 15 (S403).

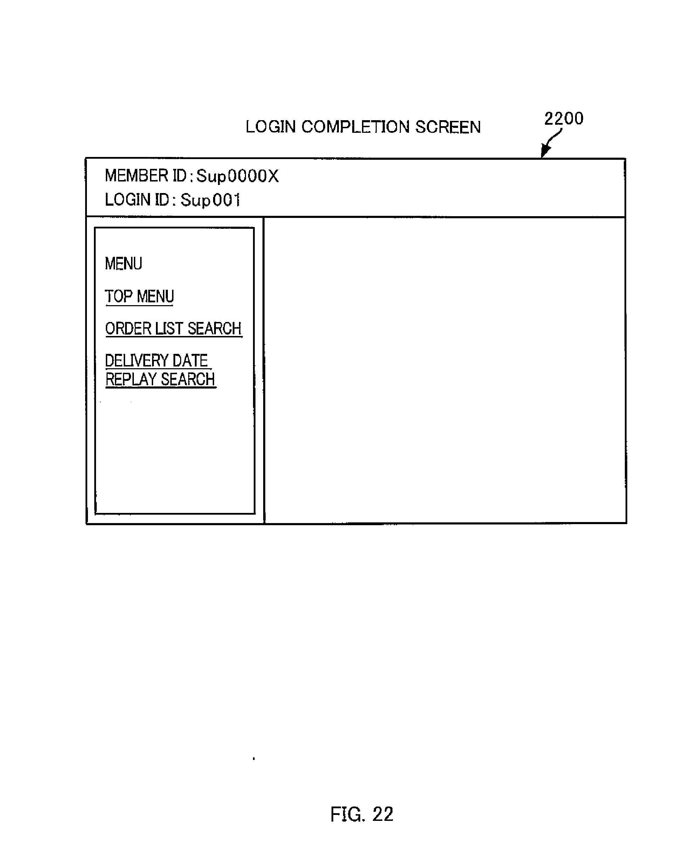

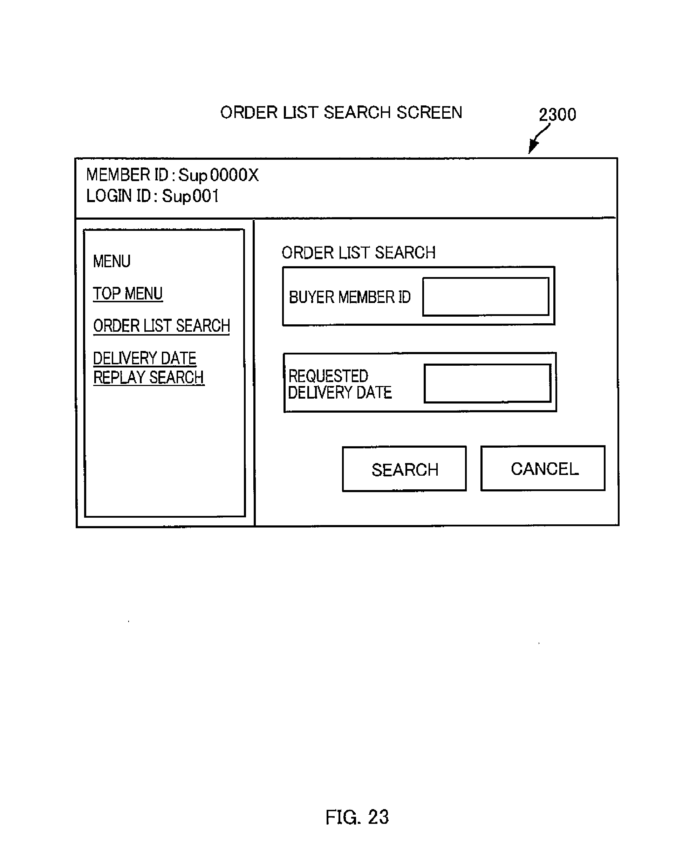

For example, if the result of user authentication is authentication OK, a login completion screen 2200 depicted in Fig. 22 may be displayed as the output screen of the user terminal 15 (in Fig. 22, the supplier company is indicated as the login member, but the same applies for the buyer company). If a user presses down a link to "ORDER LIST SEARCH" on the screen 2200, the G/W server 11 changes the output screen to an order list search screen 2300 depicted in Fig. 23.

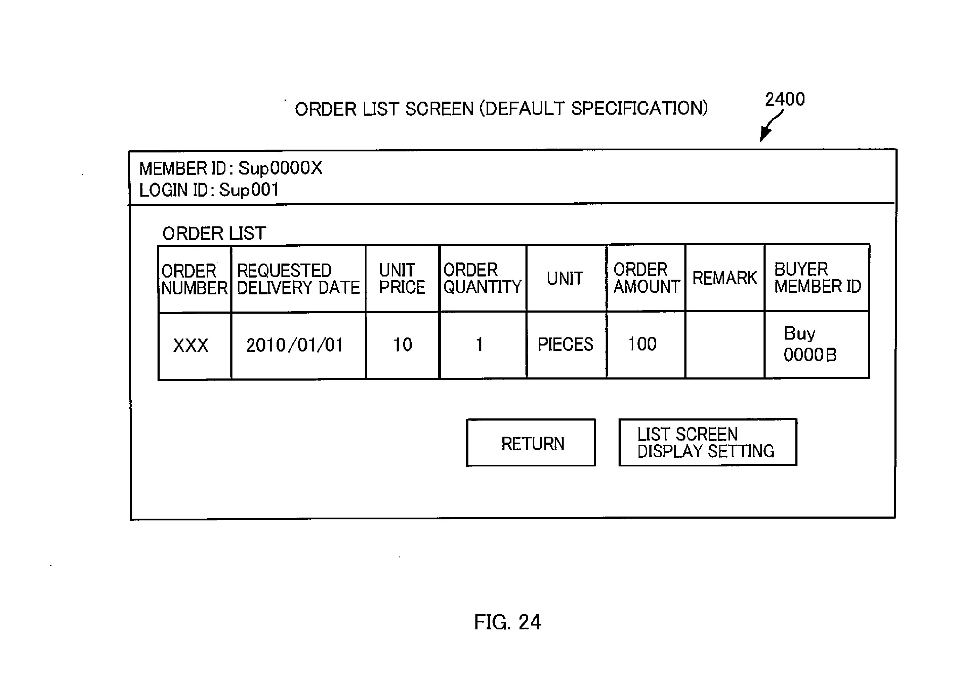

The order list search screen 2300 depicted in Fig. 23 displays items that can be inputted as search conditions of order information (e.g., a member ID of a buyer company, a requested delivery date, etc.), a search button, and a cancel button. If a user presses down the cancel button, the search condition input contents depicted in Fig. 23 are cleared. If a user presses down the search button, the G/W server 11 changes the output screen to a screen depicted in Fig. 24, 25, or 26.

If the result of authentication is authentication NG at step S402, the process is terminated and, in contrast, if the authentication is OK, the G/W server 11 identifies, for example, display setting contents of the list screen (= output screen correlated with a corresponding process, which is the "order list screen": S001 in this case) in any one of the databases 131 to 138 (= the first database) of the screen customization definition DB server 13 (S404). The G/W server 11 sets transactional data related to the buyer company (= a party A) read out from the order information database 121 (= the second database) of the data exchange DB server 12 with respect to the list screen, in the corresponding output screen (which is screen data corresponding to the "order list screen" in this case and retained in advance in the storage unit of any one of the servers 11 to 14) in accordance with the identified display setting contents, to generate output screen data, and send the output screen data back to the user terminal 15 of the buyer company (S405). Examples of the order list screen returned to the user terminal 15 at step S405 are those depicted in Figs. 24 to 26, for example. Screens of Figs. 24 to 26 will be described later.

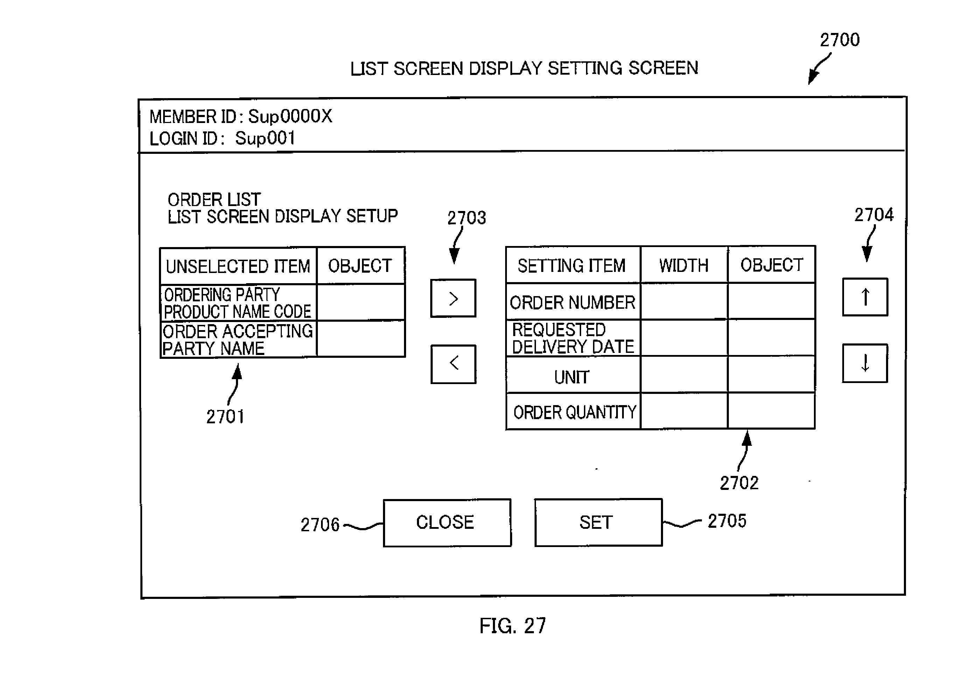

On the other hand, upon receiving the output screen data of the list screen from the G/W server 11, the user terminal 15 displays the output screen data on a displaying device, etc., for browsing by a person in charge for the buyer company. It is assumed that the person in charge for the buyer company browsed the list screen and wants to customize the list screen, and that the person in charge has inputted customization information (= instruction to change the display setting contents) of the list screen through a predetermined interface (such as a button or a selection list in a menu) on the list screen. To accept this customization information from the user via the user terminal 15, it is assumed that, for example, a list screen display setting screen 2700 (a specification accepting screen) depicted in Fig. 27 is sent from the G/W server 11 to the user terminal 15.

This screen 2700 is an interface for customizing the list screen and displays a list 2701 of items not selected as the display objects in a list screen in left hand side section and a list 2702 of items already selected as the display objects on the list screen in a right hand side section. The screen 2700 displays ">" and "<" buttons 2703 that move a corresponding item between the list 2701 and the list 2702 to set whether the item can be displayed on the list screen, and "↑" and "↓" buttons 2704 that change an arrangement order of items in the list. The screen 2700 displays a "set" button 2705 for accepting an instruction for registering the change contents from a user and a "close" button 2706 for closing the screen.

If it is desired to customize an item displayed on the list screen, the person in charge for the buyer company can check an "object" field of the corresponding item in the list 2701 or the list 2702 in the screen 2700 and press down the button 2703 to move the corresponding item to the list 2702 or the list 2701. The data of such change contents in the screen 2700 is naturally acquired by the user terminal 15 and is retained in a memory, etc., as input of the customization information (= instruction for changing the display setting contents) of the list screen.

The G/W server 11 reads data related to the list screens in the DBs, i.e., the default item definition master DB 131, the default list definition master DB 132, the default reply definition master DB 133, the buyer-specific item definition master DB 134, the buyer-specific list definition master DB 135, the buyer-specific reply definition master DB 136, in addition to the screen 2700, to set the data in a predetermined screen for input, and transmits the data of the screen for input (specification accepting screen) to the user terminal 15 to accept the change. The data of change contents related to the master DBs is naturally acquired by the user terminal 15 and is retained in a memory, etc., as input of the customization information (= instruction for changing the display setting contents) of the list screens.

At this time, the user terminal 15 transmits a customization registration request including the customization information to the G/W server 11 (S406). The G/W server 11 receives the registration request (S407) and correlates and registers the customization information with the member ID of the buyer company (= identification information of the party A) for the corresponding output screen = the order list screen in the corresponding database of the screen customization definition DB server 13 (S408: a process of the list screen customization registration function 212). The G/W server 11 returns a registration result of the customization information to the user terminal 15 (S409).

Similarly, if the authentication is OK in the authentication result at step S403, the G/W server 11 may identify, for example, display setting contents of a reply screen (= output screen correlated with a corresponding process, which is the "delivery date replay screen": S002 in this case) in any one of the databases 131 to 138 (= the first database) of the screen customization definition DB server 13. In this case, the G/W server 11 sets transactional data related to the buyer company (= the party A) read out from the delivery date reply information database 122 (= the second database) of the data exchange DB server 12 for the list screen, in the corresponding output screen (which is screen data corresponding to the "reply screen" in this case and retained in advance in the storage unit of any one of the servers 11 to 14) in accordance with the identified display setting contents, to generate output screen data, and returns the output screen data to the user terminal 15 of the buyer company.

On the other hand, the user terminal 15 which has received the output screen data of the reply screen from the G/W server 11 displays the output screen data on a displaying device, etc., for browsing by a person in charge for the buyer company. It is assumed that the person in charge for the buyer company browsing the list screen wants to customize the reply screen and inputs customization information (= instruction for changing the display setting contents) of the reply screen through a predetermined interface (such as a button or a selection list in a menu) on the reply screen. The manner in which the customization information is specified, and contents thereof will be described later.

At this time, the user terminal 15 transmits a customization registration request including the customization information to the G/W server 11 (S410). The G/W server 11 receives the registration request (S411) and correlates and registers the customization information with the member ID of the buyer company (= identification information of the party A) for the corresponding output screen = the reply screen in the corresponding database of the screen customization definition DB server 13 (S412: a process of the reply screen customization registration function 213). The G/W server 11 returns a registration result of the customization information to the user terminal 15 (S413).

### --Process Procedure 2-

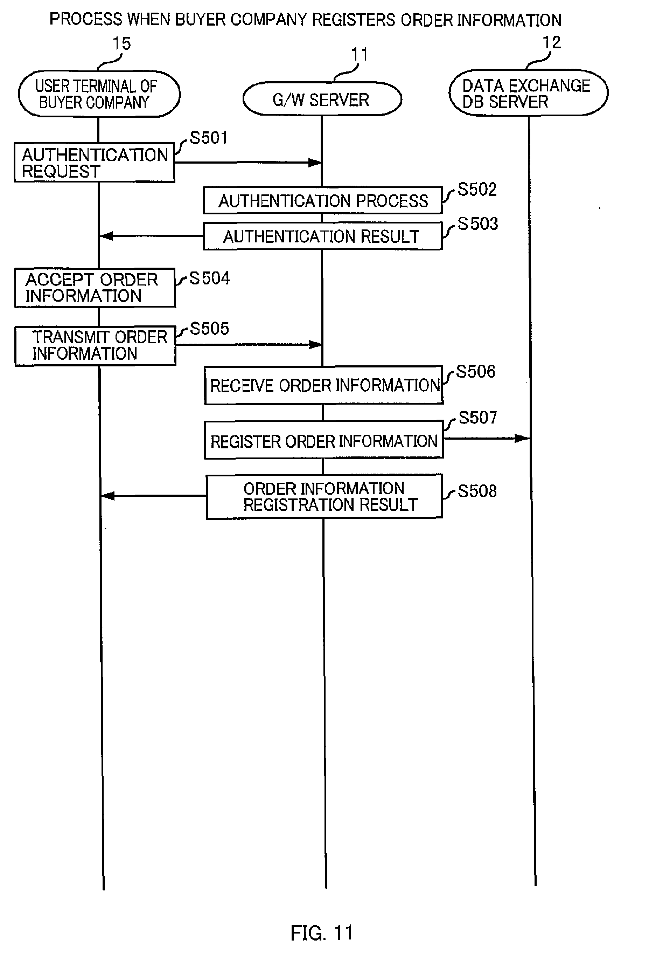

Fig. 11 is a flowchart of a process procedure example 2 of the screen customization supporting method in the present embodiment. A process executed by the user terminal 15 of the buyer company when registering order information to be displayed on the list screen will be described. In this case, the user terminal 15 of the buyer company transmits an authentication request including, for example, a member ID, a login ID, and a password, to the G/W server 11 (S501). Upon receiving this request, the G/W server 11 checks the authentication request against the user authentication information 216 to execute the user authentication process (S502) and returns an authentication result thereof to the user terminal 15 (S503).

If the authentication is NG in the authentication result, the process is terminated and, in contrast, if the authentication is OK, the user terminal 15 displays, for example, a screen that accepts order information to accept specification of order information from a user (S504) and transmits the order information to the G/W server 11 (S505). On the other hand, the G/W server 11 receives the order information (S506) and registers the order information into the order information DB 121 of the data exchange DB server 12 (S507). The G/W server 11 transmits to the user terminal 15 a result of registration of the order information in the order information DB 121 (S508).

### --Process Procedure 3-

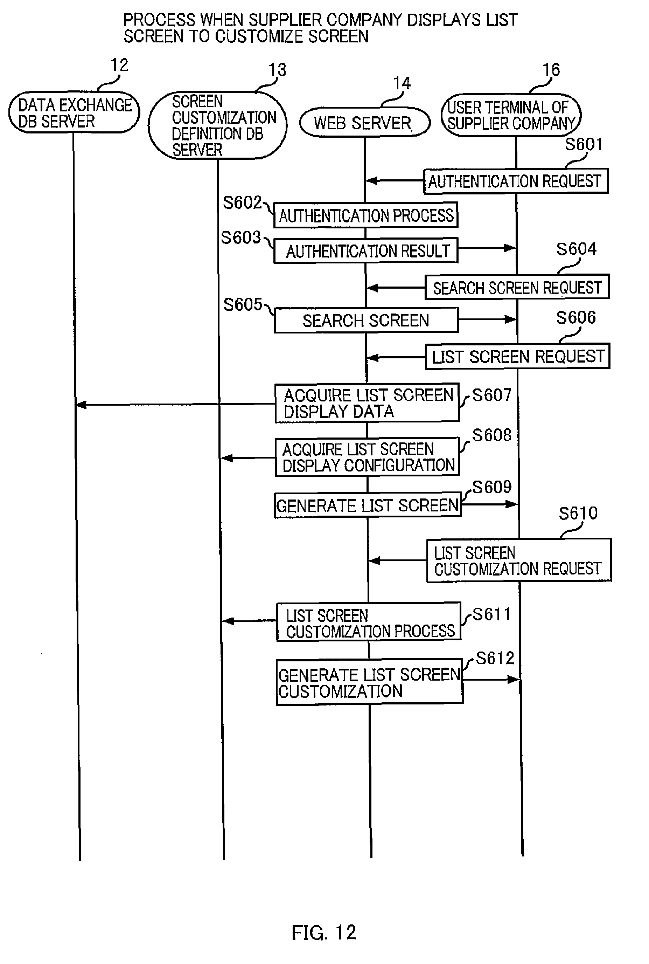

Fig. 12 is a flowchart of a process procedure example 3 of the screen customization supporting method in the present embodiment. A customization process of the list screen will be described that is executed between the user terminal 16 of the supplier company and the web server 14 etc.

In this case, the user terminal 16 of the supplier company transmits to the web server 14 an authentication request including, for example, a member ID, a login ID, and a password, along with a browse request for the list screen (S601). Upon receiving this request, the web server 14 checks the authentication request against the user authentication information 319 to execute the user authentication process (S602) and returns an authentication result thereof to the user terminal 16 (S603).

If the authentication is NG in the authentication result, the process is terminated and, in contrast, if the authentication is OK, the user terminal 16 sends a search screen request to the web server 14 so as to search the order information received by the corresponding supplier company (S604). In response to this request, the web server 14 returns to the user terminal 16 a search screen (the web server 14 retains the screen data in advance in the storage unit) that accepts specification of search conditions such as a member ID of a supplier company, an order number, and a delivery date, for example (S605).

The user terminal 16 displays the search screen on a display device, etc., to accept specification of search conditions from a user and sends the accepted search conditions as a list screen request to the web server 14 (S606).

On the other hand, the web server 14 receives the list screen request from the user terminal 16 and acquires the order information conforming to the search conditions indicated by the list screen request from the order information database 121 (= the second database) of the data exchange DB server 12 (S607: a process of the search function 313). The web server 14 identifies and acquires the display setting contents of the list screen (= output screen correlated with a corresponding process, which is the "order list screen": S001 in this case) from the any one of the databases 131 to 138 (= the first database) of the screen customization definition DB server 13 (S608: a process of the search function 313).

The web server 14 sets the order information acquired at step S607 in the corresponding output screen (which is screen data corresponding to the "order list screen" in this case and retained in advance in the storage unit of any one of the servers 11 to 14) in accordance with the display setting contents acquired at step S608 to generate output screen data, and returns the output screen data to the user terminal 16 (S609: a process of the list screen display function 314).

On the other hand, the user terminal 16 that has received the output screen data of the list screen from the web server 14 displays the output screen data on a display device, etc., for browsing by a person in charge for the supplier company. It is assumed that the person in charge for the supplier company browsing the list screen wants to customize the list screen and inputs customization information (= instruction for changing the display setting contents) of the list screen through a predetermined interface (such as a button or a selection list in a menu) on the list screen. To input this customization information, it is assumed that, for example, the list screen display setting screen 2700 depicted in Fig. 27 is sent from the web server 14 to the user terminal 16.

This screen 2700 is an interface for customizing the list screen and displays the list 2701 of items not selected as the display objects on the list screen in a left hand side section and the list 2702 of items already selected as the display objects on the list screen in a right hand side section. The screen 2700 displays the ">" and "<" buttons 2703 that move a corresponding item between the list 2701 and the list 2702 to set whether the item can be displayed on the list screen, and the "↑" and "↓" buttons 2704 that change an arrangement order of items in the list. The screen 2700 displays the "set" button 2705 for accepting an instruction for registering the change contents from a user and the "close" button 2706 for closing the screen.

If it is desired to customize an item displayed on the list screen, the person in charge for the supplier company can check an "object" field of the corresponding item in the list 2701 or the list 2702 in the screen 2700 and press down the button 2703 to move the corresponding item to the list 2702 or the list 2701. The data of such change contents in the screen 2700 is naturally acquired by the user terminal 16 and is retained in a memory, etc., as input of the customization information (= instruction for changing the display setting contents) of the list screen.

At this time, the user terminal 16 transmits a customization request including the customization information to the web server 14 (S610). The web server 14 receives the request and correlates and registers the customization information with the login ID of the supplier company for the corresponding output screen = the order list screen in the login-ID-specific list definition master 137 of the screen customization definition DB server 13 (S611).

The web server 14 sets the order information acquired at step S607 in the corresponding output screen (which is screen data corresponding to the "order list screen" in this case and retained in advance in the storage unit of any one of the servers 11 to 14) in accordance with the display setting contents acquired at step S611 to generate output screen data, and returns the output screen data to the user terminal 16 (S612: a process of the list screen display function 314).

### --Process Procedure 4-

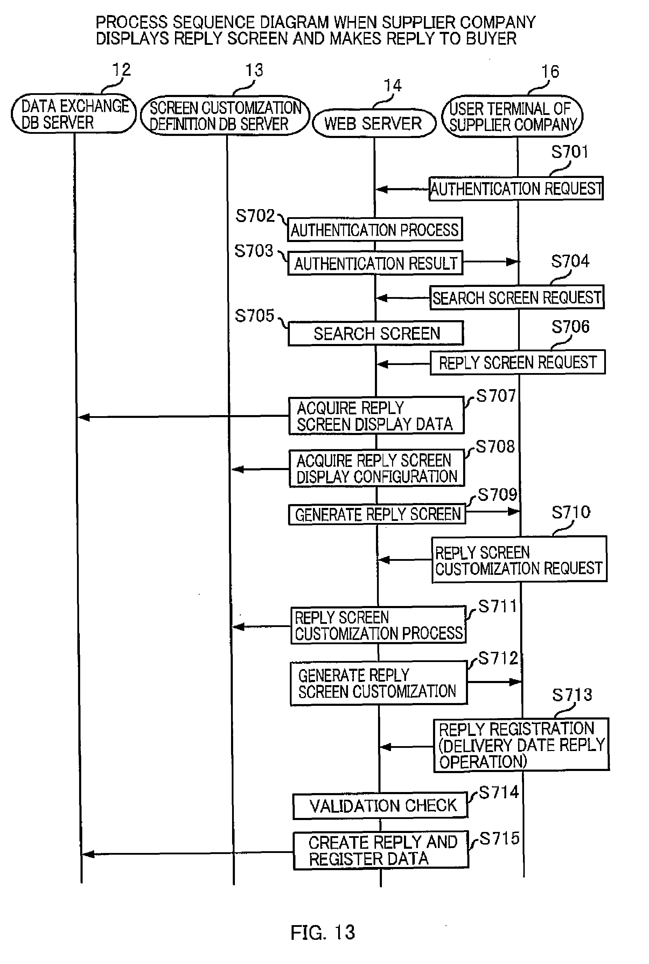

Fig. 13 is a flowchart of a process procedure example 4 of the screen customization supporting method in the present embodiment. A customization process of the reply screen will be described that is executed between the user terminal 16 of the supplier company and the web server 14 etc.

In this case, the user terminal 16 of the supplier company transmits to the web server 14 an authentication request including, for example, a member ID, a login ID, and a password, along with a browse request for the reply screen (S701). When receiving this request, the web server 14 checks the authentication request against the user authentication information 319 to execute the user authentication process (S702) and returns an authentication result thereof to the user terminal 16 (S703).

If the authentication is NG in the authentication result, the process is terminated and, in contrast, if the authentication is OK, the user terminal 16 sends a search screen request to the web server 14 so as to search the delivery date reply information registered by the corresponding supplier company in the data exchange DB server 12 (S704). In response to this request, the web server 14 returns to the user terminal 16 a search screen (the web server 14 retains the screen data in advance in the storage unit) that accepts specification of search conditions such as member IDs of a supplier company and a buyer company, an order number, and a delivery date, for example (S705).

The user terminal 16 displays the search screen on a display device, etc., to accept specification of search conditions from a user and sends the accepted search conditions as a reply screen request to the web server 14 (S706).

On the other hand, the web server 14 receives the reply screen request from the user terminal 16 and acquires the delivery date reply information conforming to the search conditions indicated by the reply screen request from the delivery date reply information DB 122 (= the second database) of the data exchange DB server 12 (S707: a process of the search function 313). The web server 14 identifies and acquires the display setting contents of the reply screen (= output screen correlated with a corresponding process, which is the "delivery date reply screen": S002 in this case) from the any one of the databases 131 to 138 (= the first database) of the screen customization definition DB server 13 (S708: a process of the search function 313).

The web server 14 sets the delivery date reply information acquired at step S707 in the corresponding output screen (which is screen data corresponding to the "reply screen" in this case and retained in advance in the storage unit of any one of the servers 11 to 14) in accordance with the display setting contents acquired at step S708 to generate output screen data, and returns the output screen data to the user terminal 16 (S709: a process of the reply screen display function 316).

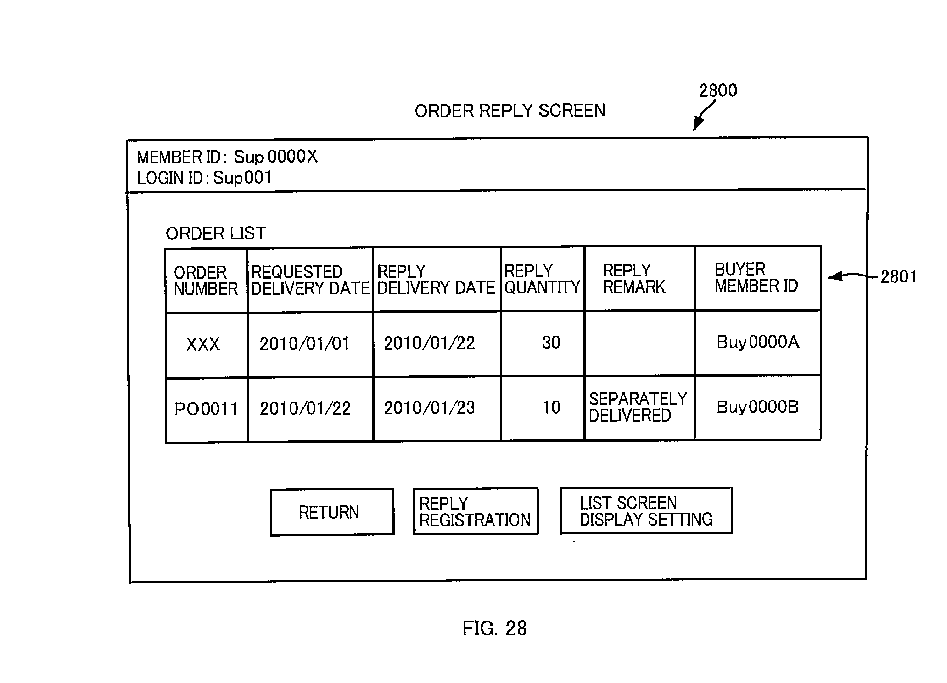

An example of the output screen = reply screen returned to the user terminal 16 may be a delivery date reply screen 2800 depicted in Fig. 28. The screen 2800 is a screen with layout and output items of the delivery date reply information determined based on the setting contents in the default definition masters (Figs. 7A to 7C), the buyer-specific definition masters (Figs. 8A to 8C), and the login-ID-specific definition masters (Figs. 9A and 9B).

On the other hand, when receiving the output screen data of the reply screen from the web server 14, the user terminal 16 displays the output screen data on a display device, etc., for browsing by a person in charge for the supplier company. If the person in charge for the supplier company browsing the reply screen wants to customize the reply screen, it is assumed that the person inputs customization information (= instruction for changing the display setting contents) of the reply screen through a predetermined interface (such as a button or a selection list in a menu) on the reply screen. To input this customization information, for example, if the person in charge for the supplier company wants to customize a name of an item displayed on the reply screen in the delivery date reply screen 2800 of Fig. 28, the corresponding item is selected and the name is rewritten in an item name 2801 in the screen 2800. The data of such change contents in the screen 2800 is naturally acquired by the user terminal 16 and is retained in a memory, etc., as input of the customization information (= instruction for changing the display setting contents) of the reply screen.

The user terminal 16 transmits a customization request including the customization information to the web server 14 in this case (S710). The web server 14 receives the request and correlates and registers the customization information with the login ID of the supplier company for the corresponding output screen = the reply screen in the login-ID-specific reply definition master 138 of the screen customization definition DB server 13 (S711: a process of the reply screen customization function 317).

The web server 14 sets the delivery date reply information acquired at step S707 in the corresponding output screen (which is screen data corresponding to the "delivery date reply screen" in this case and retained in advance in the storage unit of any one of the servers 11 to 14) in accordance with the display setting contents acquired at step S711 to generate output screen data = reply screen data, and returns the reply screen data to the user terminal 16 (S712: a process of the reply screen display function 316).

On the other hand, the user terminal 16 receives and displays the reply screen data from the web server 14 on a displaying device, etc., and accepts delivery date reply operations (e.g., input of values of a reply delivery date, a reply quantity, a reply remark, etc., on the screen of Fig. 28) from a user for the order information to send the delivery date reply information to the web server 14 (S713). When the user performs the operation of pressing down a reply registration button on the delivery date reply screen of Fig. 28 described above, step S713 is executed.

The web server 14 receives the delivery date reply information from the user terminal 16, executes a validation check (e.g., checking whether a value input in an input field conforms to rules of attribute, character code, length, byte, etc., prescribed by the masters 131, 134, etc., related to item definitions) (S714), and registers the information as the appropriate delivery date reply information in the delivery date reply information DB 122 of the data exchange DB server 12 if no problem exists (S715).

### --Process Procedure 5-

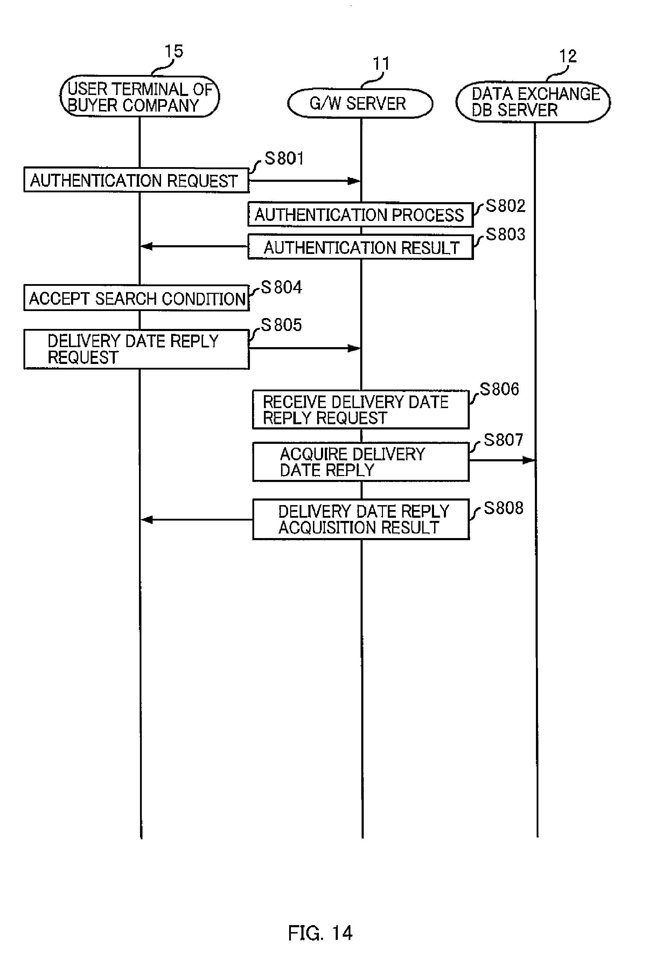

Fig. 14 is a flowchart of a process procedure example 5 of the screen customization supporting method in the present embodiment. A process will be described when the user terminal 15 of the buyer company acquires delivery date reply information. In this case, the user terminal 15 of the buyer company transmits to the G/W server 11 an authentication request including a member ID, a login ID, and a password along with a browse request for the delivery date reply information (S801). When receiving this request, the G/W server 11 checks the authentication request against the user authentication information 216 to execute the user authentication process (S802) and returns an authentication result thereof to the user terminal 15 (S803).

If the authentication is NG in the authentication result, the process is terminated and, in contrast, if the authentication is OK, the user terminal 15 accepts specification of search conditions, for example, member IDs of a supplier company and a buyer company, an order number, a delivery date, etc., from a user, so as to search the delivery date reply information registered by the supplier company in the data exchange DB server 12 for the order information issued by the corresponding buyer company (S804). The user terminal 15 accepts specification of search conditions from the user and sends the accepted search conditions as a delivery date reply request to the G/W server 11 (S805).

On the other hand, the G/W server 11 receives the delivery date reply request from the user terminal 15 (S806) and acquires the delivery date reply information conforming to the search conditions indicated by the delivery date reply request from the delivery date reply information DB 122 (= the second database) of the data exchange DB server 12 (S807: a process of the search function 313). The G/W server 11 returns the delivery date reply information acquired at step S807 to the user terminal 15.

### --Process Procedure 6--

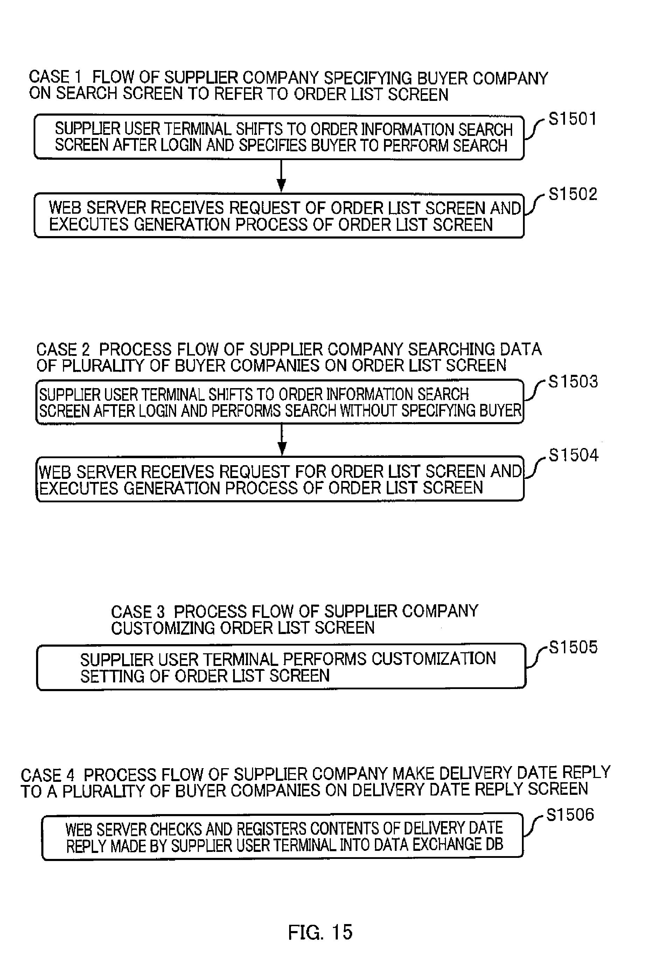

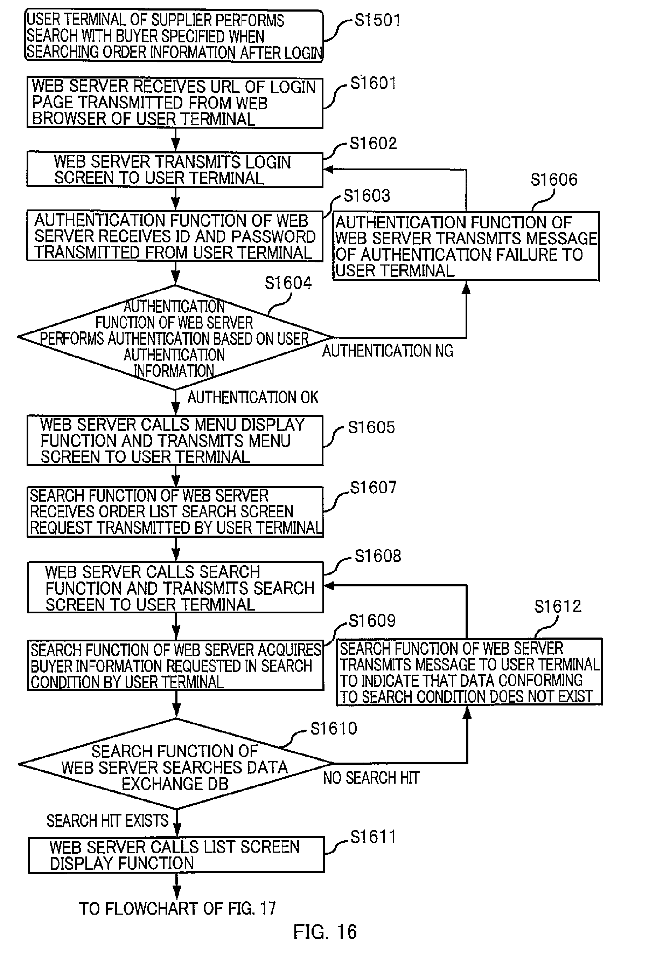

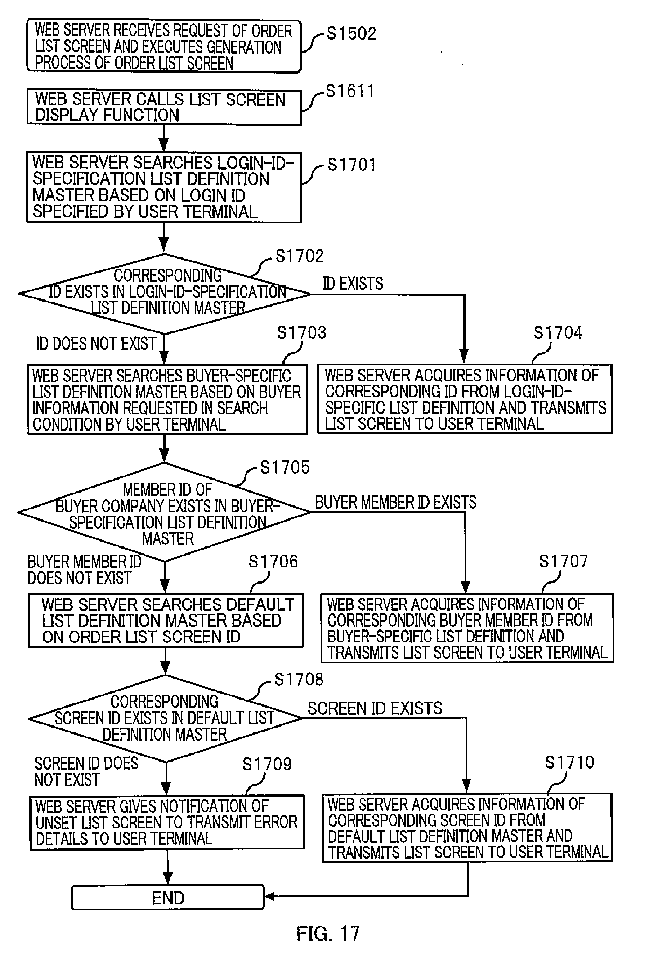

Fig. 15 is a flowchart of a process procedure example 6 of the screen customization supporting method in the present embodiment. A summary of a flowchart will be described for each case in relation to the processes executed by the functions of the web server 14 (the search function 313, the list screen display function 314, the list screen customization function 315, the reply screen display function 316, the reply screen customization function 317, and the reply registration function 318). A case 1 corresponds to a process flow when a supplier company refers to the order list screen related to a specified buyer company. In this case, the user terminal 16 of the supplier company specifies a buyer company and searches order information on the search screen of order information after login to the web server 14 (S1501). The web server 14 receives a request for the order list screen from the user terminal 16 and executes a generation process of the order list screen (S1502). This flow will be described later in detail with reference to process procedure examples 7 and 8 (Figs. 16 and 17).

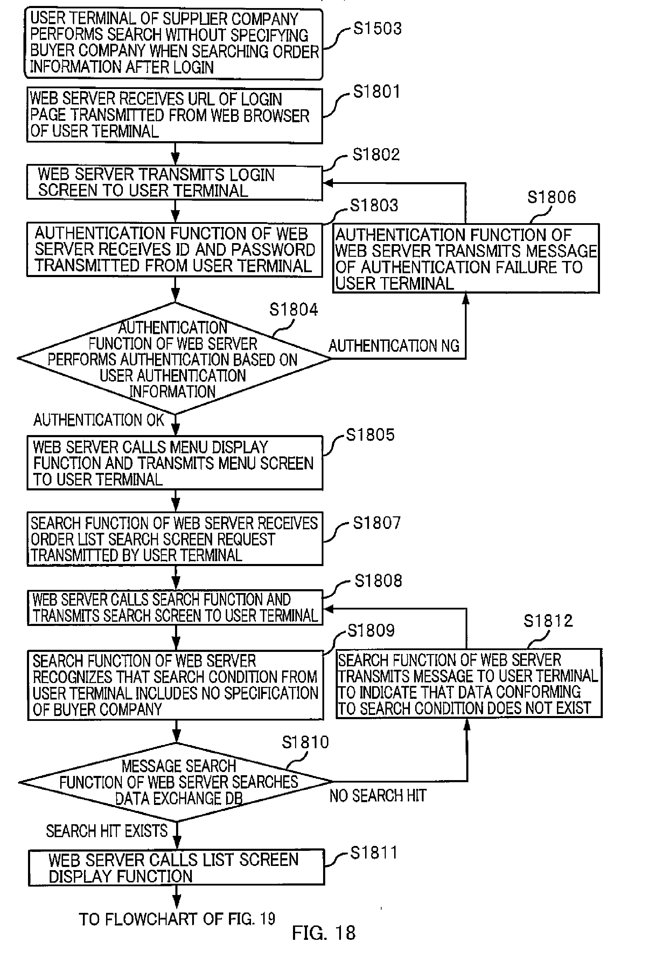

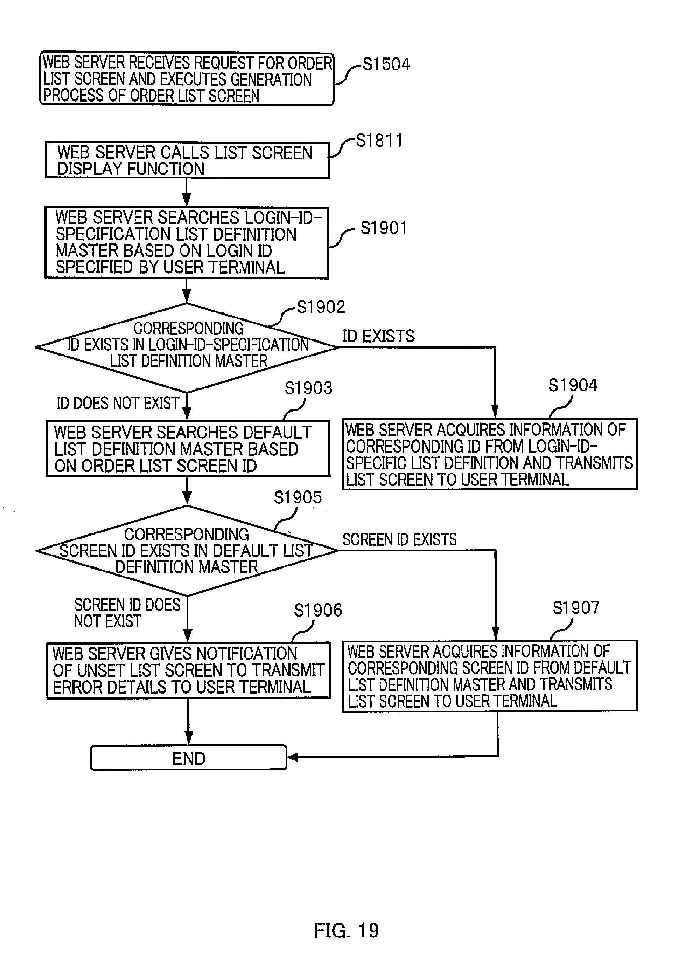

A case 2 corresponds to a process flow when a supplier company refers to data of a plurality of buyer companies on the order list screen. In this case, the user terminal 16 of the supplier company searches order information without specifying a buyer company on the search screen of order information after login to the web server 14 (S1503). The web server 14 receives a request for the order list screen from the user terminal 16 and executes a generation process of the order list screen (S1504). This flow will be described later in detail with reference to process procedure examples 9 and 10 (Figs. 18 and 19).

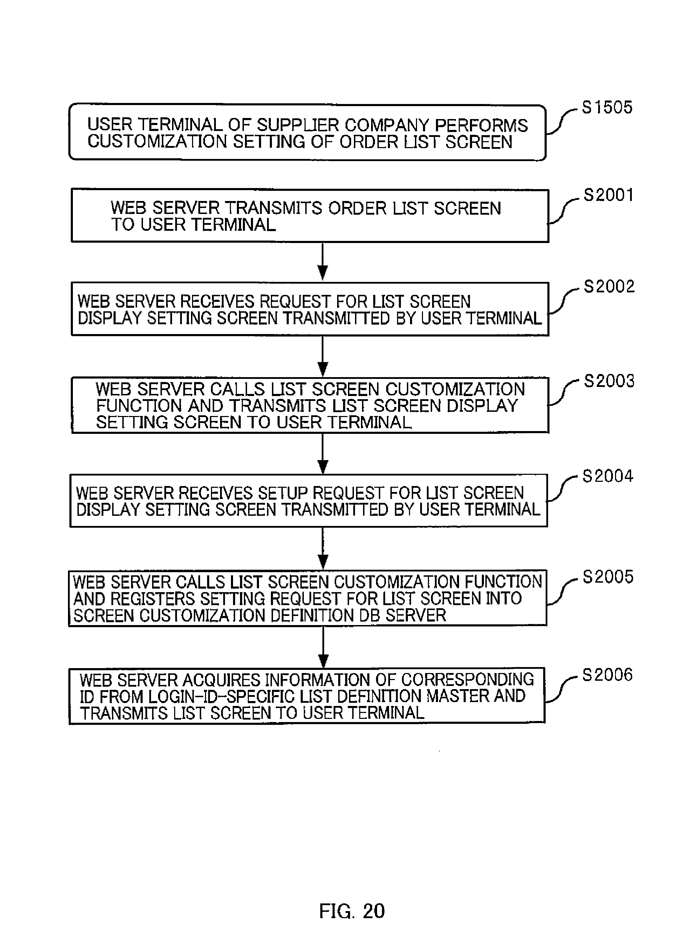

A case 3 corresponds to a process flow when a supplier company customizes the order list screen. In this case, the user terminal 16 of the supplier company performs the customization setting of the order list screen (S1505). This flow will be described later in detail with reference to a process procedure example 11 (Fig. 20).

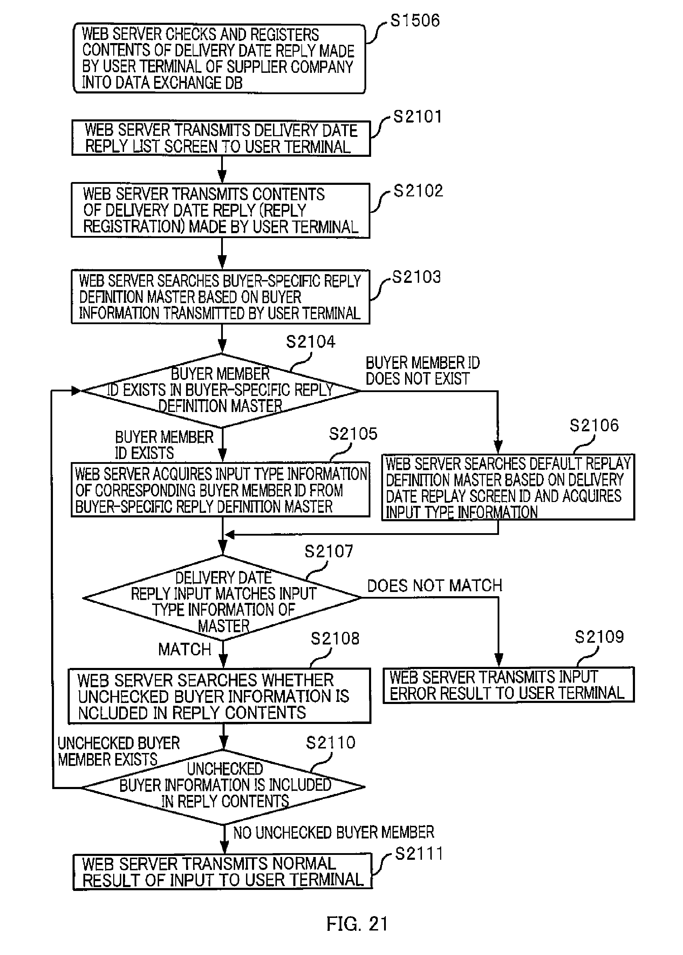

A case 4 corresponds to a process flow when a supplier company makes delivery date replies to a plurality of buyers on the delivery date reply screen. In this case, the web server 14 checks and registers contents of the delivery date replies made by the user terminal 16 of the supplier company into the data exchange DB server 12 (S1506). This flow will be described later in detail with reference to a process procedure example 12 (Fig. 21).

### --Process Procedure 7--

Fig. 16 is a flowchart of the process procedure example 7 of the screen customization supporting method in the present embodiment. The process of the case 1 (step S1501) of Fig. 15 will be described in relation to the search function 313 of the web server 14. In this case, the web server 14 receives URL of a login page transmitted from a web browser of the user terminal 16 of the supplier company (S1601) and transmits a login screen to the user terminal 16 (S1602).

The authentication function 311 of the web server 14 receives a login ID and a password transmitted from the user terminal 16 (S1603) and checks whether a combination of the login ID and the password exists in the user authentication information 319 (S1604). If existing (the determination at S1604 is "AUTHENTICATION OK"), the web server 14 calls the menu display function 312 to transmit a menu screen to the user terminal 16 (S1605). An example of this menu screen is depicted in Fig. 22.

The search function 313 of the web server 14 receives a request for an order list search screen transmitted from the user terminal 16 (S1607) and transmits the order list search screen (S1608). An example of this order list search screen is depicted in Fig. 23. The search function 313 of the web server 14 receives information of a buyer company indicated by a search condition transmitted from the user terminal 16 via the order list search screen (S1609) and uses this search condition to check whether the order information of the corresponding buyer company exists in the data exchange DB server 12 (S1610). If the order information exists (the determination at S1610 is "SEARCH HIT EXISTS"), the web server 14 calls the list screen display function 314 (S1611).

### --Process Procedure 8--

Fig. 17 is a flowchart of the process procedure example 8 of the screen customization supporting method in the present embodiment. The process of the case 1 (step S1502) of Fig. 15 will be described in relation to the list screen display function 314 of the web server 14 called at step S1611 in the process procedure example 7.

In this case, after step S1611, the list screen display function 314 of the web server 14 searches the login-ID-specific list definition master 137 based on the login information acquired at the time of authentication from the user terminal 16 (S1701). At this step, the web server 14 searches whether a combination of a screen ID ("S001" indicative of the order list screen in this case) and the login ID indicated by the login information exists in the login-ID-specific list definition master 137. If the corresponding combination exists (the determination at S1702 is "ID EXISTS"), the web server 14 acquires the information = data of display setting contents from the login-ID-specific list definition master 137 based on the conditions of the screen ID and the login ID, sets the order information (which is acquired at step S1610) as the screen data of the list screen in accordance with the display setting contents to generate the list screen, and transmits the list screen to the user terminal 16 (S1704).

On the other hand, if the combination of the screen ID and the login ID does not exist in the login-ID-specific list definition master 137 (the determination at S1702 is "ID DOES NOT EXIST"), the list screen display function 314 of the web server 14 searches the buyer-specific list definition master 135 based on the member ID of the buyer company acquired at step S1610 (S1703). If a combination of the screen ID and the member ID of the buyer company exists in this search (the determination at S1705 is "BUYER MEMBER ID EXISTS") , the web server 14 acquires the information = data of display setting contents from the buyer-specific list definition master 135 based on the conditions of the screen ID and the buyer member ID, sets the order information (which is acquired at step S1610) as the screen data of the list screen in accordance with the display setting contents to generate the list screen, and transmits the list screen to the user terminal 16 (S1707).

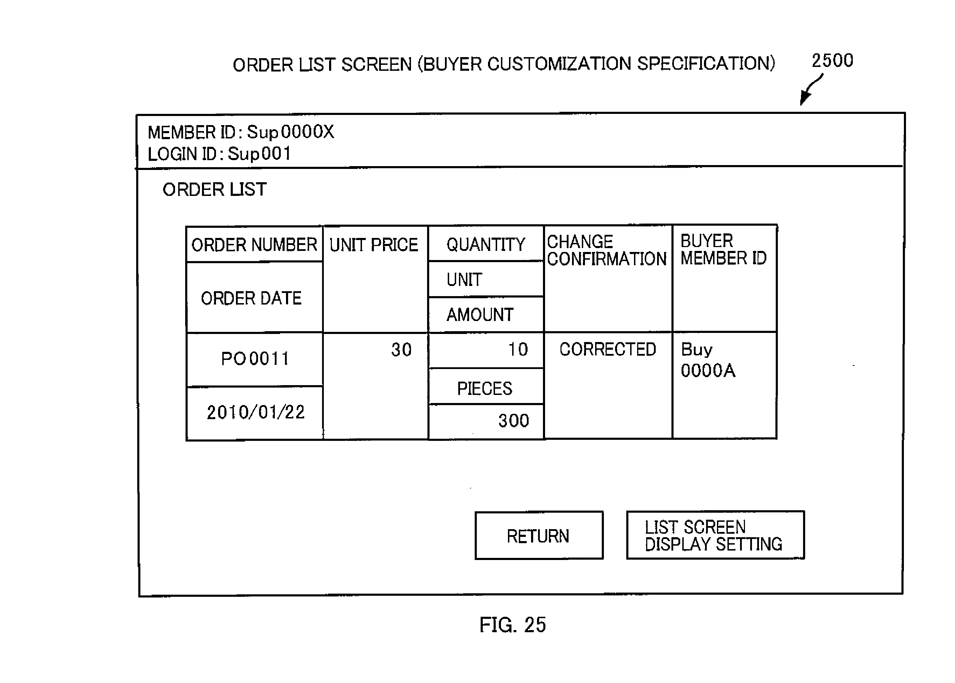

An order list screen 2500 (buyer customization specification) depicted in Fig. 25 is an example of the list screen transmitted to the user terminal 16 at step S1707. This example is a screen in the case that one buyer company conforms to the search condition, that the screen customization is performed by the corresponding buyer company, and that the screen is not customized for a login ID of a user (= supplier company).

On the other hand, if it is determined at step S1705 that the combination of the screen ID and the member ID does not exist (the determination at S1705 is "BUYER MEMBER ID DOES NOT EXIST") , the list screen display function 314 of the web server 14 searches the default list definition master 132 based on the screen ID (S1706). If the screen ID exists in this search (the determination at S1708 is "SCREEN ID EXISTS"), the web server 14 acquires the information = data of display setting contents from the default list definition master 135 based on the conditions of the screen ID, sets the order information (which is acquired at step S1610) as the screen data of the list screen in accordance with the display setting contents to generate the list screen, and transmits the list screen to the user terminal 16 (S1710).

An order list screen 2400 (default specification) depicted in Fig. 24 is an example of the list screen transmitted to the user terminal 16 at step S1710. This example is a screen for a case where there is one buyer company which matches the search condition and where the screen customization is not performed by the corresponding buyer company and the screen is not customized for a login ID of a user (= supplier company).

If the screen ID does not exist (the determination at S1708 is "SCREEN ID DOES NOT EXIST"), the web server 14 notifies the user terminal 16 of an error due to an unset list screen (S1709) and the process is terminated.

### --Process Procedure 9--

Fig. 18 is a flowchart of the process procedure example 9 of the screen customization supporting method in the present embodiment. The process of the case 2 (step S1503) of Fig. 15 will be described in relation to the search function 313 of the web server 14. This process flow is the same flow as the process flow of Fig. 16 until step S1808 and, therefore, corresponding steps will not be described.

In this case, the search function 313 of the web server 14 recognizes that the specification of a buyer company is not included in the search condition transmitted from the user terminal (S1809) and checks whether order information corresponding to the search condition exists in the data exchange DB server 12 (S1810). If the corresponding order information exists as a result of the check (the determination at S1810 is "SEARCH HIT EXISTS"), the web server 14 calls the list screen display function 314 (S1811).

### --Process Procedure 10--

Fig. 19 is a flowchart of the process procedure example 10 of the screen customization supporting method in the present embodiment. The process of the case 2 (step S1504) of Fig. 15 will be described in relation to the list screen display function 314 of the web server 14 called at step S1811 in the process procedure example 9. In this case, after step S1811, the list screen display function 314 of the web server 14 searches the login-ID-specific list definition master 137 based on the login information acquired at the time of authentication (step S1803) from the user terminal 16 (S1901) . At this step, if a combination of a screen ID ("S001" indicative of the order list screen in this case) and the login ID exists in the login-ID-specific list definition master 137 (the determination at S1902 is "ID EXISTS") , the web server 14 acquires the information = data of display setting contents from the login-ID-specific list definition master 137 based on the conditions of the screen ID and the login ID, sets the order information (which is acquired at step S1810) as the screen data of the list screen in accordance with the display setting contents to generate the list screen, and transmits the list screen to the user terminal 16 (S1904).

On the other hand, if the combination of the screen ID and the login ID does not exist in the login-ID-specific list definition master 137 (the determination at S1902 is "ID DOES NOT EXIST"), the list screen display function 314 of the web server 14 searches the default list definition master 135 based on the member ID (S1903) . If the screen ID exists in the default list definition master 135 (the determination at S1905 is "SCREEN ID EXISTS"), the web server 14 acquires the information = display setting contents from the default list definition master 135 based on the condition of the screen ID, sets the order information (which is acquired at step S1810) as the screen data of the list screen in accordance with the display setting contents to generate the list screen, and transmits the list screen to the user terminal 16 (S1907). In contrast, if the screen ID does not exist in the default list definition master 135 (the determination at S1905 is "SCREEN ID DOES NOT EXIST") , the web server 14 notifies the user terminal 16 of an error due to an unset list screen (S1906) and the process is terminated.

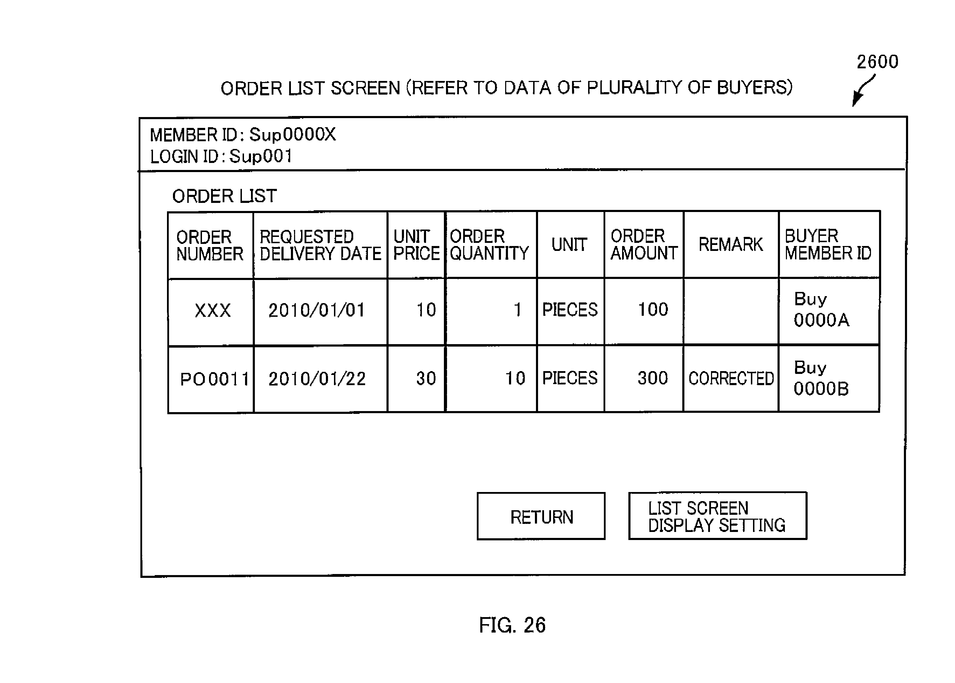

An order list screen 2600 (refer to data of plurality of buyers) depicted in Fig. 26 is an example of the order list screen transmitted to the user terminal 16 at step S1907. The screen 2600 is a screen in the case that two buyer companies conform to the search condition and that the screen is not customized for a login ID of a user.

### --Process Procedure 11--

Fig. 20 is a flowchart of the process procedure example 11 of the screen customization supporting method in the present embodiment. The process of the case 3 (step S1505) of Fig. 15 will be described in relation to the list screen customization function 315 of the web server 14. As depicted in the flows of Figs. 17 and 19, the list screen display function 314 of the web server 14 transmits the list screen to the user terminal 16. The screen examples in this case are as depicted in Figs. 24 to 26.

In this case, it is assumed that the web server 14 receives a request for list screen display setting = a request for customization from the user terminal 16 (S2002). The list screen customization function 315 of the web server 14 transmits the list screen display setting screen to the user terminal 16 (S2003). An example of the list screen display setting screen 2700 is as depicted in Fig. 27.

The web server 14 receives the list screen setting request transmitted by the user terminal 16 via the list screen display setting screen 2700 (S2004) and calls the list screen customization function 315 to correlate and register the list screen setting contents with the login ID of the corresponding supplier company into the login-ID-specific list definition master in the screen customization definition DB server 13 (S2005). After the registration, the web server 14 calls the list screen display function 314, searches the login-ID-specific list definition master DB 137 for the login ID specified from the user terminal 16 and the screen ID of the corresponding screen ("S001" of the order list screen) to acquire the information = data of display setting contents based on the conditions of the screen ID and the login ID, sets the order information (which is acquired at preceding steps) as the screen data of the list screen in accordance with the display setting contents to generate the list screen, and transmits the list screen to the user terminal 16 (S2006).

### --Process Procedure 12--

Fig. 21 is a flowchart of the process procedure example 12 of the screen customization supporting method in the present embodiment. The process of the case 4 (step S1506) of Fig. 15 will be described in relation to the reply screen display function 316 and the reply registration function 318 of the web server 14.

In this case, as is the case with the process flows of Figs. 17 and 19, it is assumed that the reply screen display function 316 of the web server 14 transmits the delivery date reply screen 2800 to the user terminal 16 of the supplier company (S2101). An example of the delivery date reply screen 2800 is as depicted in Fig. 28.

When the user terminal 16 performs the reply registration via the delivery date reply screen 2800, the reply registration function 318 of the web server 14 receives the contents of the delivery date reply made by the user terminal 16 (S2102) and acquires a member ID of a buyer company that is the delivery reply destination from the reply contents. The reply registration function 318 of the web server 14 searches the buyer-specific reply definition master 136 for the member ID of the buyer company (S2103).

If a combination of the screen ID ("S002" of the delivery date reply screen in this case) of the corresponding screen and the member ID of the buyer company exists in the buyer-specific reply definition master 136 (the determination at S2104 is "BUYER MEMBER ID EXISTS"), the web server 14 acquires information of an input type from the buyer-specific reply definition master 136 based on the conditions of the screen ID and the member ID of the buyer company (S2105).

On the other hand, if the combination of the screen ID and the login ID does not exist in the buyer-specific reply definition master 136 (the determination at S2104 is "BUYER MEMBER ID DOES NOT EXIST"), the reply registration function 318 of the web server 14 acquires information of an input type from the default reply definition master 133 based on the screen ID (S2106).

The web server 14 then determines whether the contents of the delivery date reply made by the user terminal 16 match the information of the input type of the masters. If the input type does not match in this determination (the determination at S2107 is "NOT MATCH"), the web server 14 transmits an input result error to the user terminal 16 (S2109). In contrast, if the input type matches in the determination (the determination at S2107 is "MATCH"), the reply registration function 318 of the web server 14 searches whether buyer information (= member ID of a buyer company) unchecked (= not subjected to the process of steps S2104 to S2109) is included in the delivery date replies acquired until step S2103 (S2108).

If an unchecked buyer is included (the determination at S2110 is "UNCHECK BUYER MEMBER ID EXISTS"), the reply registration function 318 of the web server 14 checks the reply contents again for the unchecked buyer (from S2104). In contrast, if an unchecked buyer is not included (the determination at S2110 is "NO UNCHECK BUYER MEMBER ID EXISTS") , the web server 14 perform transmission to the user terminal to indicate that the input contents are normally registered (S2111) and the process is terminated.

Although the best modes for carrying out the present invention have been specifically described, the present invention is not limited thereto and may variously be modified within a range not departing from the spirit of the present invention.

According to these embodiments, a user can arbitrarily and conveniently execute customization of various screens (such as list screens of order information and delivery date reply screens) by himself/herself in a multi-tenant environment that is a B-to-B electronic commerce environment without the need of program development for individual users. Therefore, the maintenance efficiency is improved in the operation of the electronic commerce environment on the Internet and user's requirements can rapidly and certainly be responded, leading to the improvement of usability.
Therefore, the flexible screen customization is enabled without association with individual program development in the multi-tenant environment.

From this description, at least the following matters are revealed. In the screen customization supporting system, the storage unit contains, in the first database, default display setting content data for output screens outputted to the user terminal depending on each of the processes of electronic commerce, and wherein the control unit executes the processes of, in performing the process of electronic commerce executed by the user terminal of the party A, identifying, in the first database, the display setting content of the output screen that corresponds to the process and that is associated with the identification information of the party A, in a case where the display setting content associated with the identification information of the party A is unidentifiable for the output screen corresponding to the process, identifying the default display setting content, retrieving transactional data related to the party A from the second database with respect to the process, setting the transactional data into the output screen in accordance with the identified default display setting contents to generate output screen data, and sending the output screen data back to the user terminal of the party A, receiving, via the communication unit, a change instruction for the display setting content related to the output screen from the user terminal receiving and displaying the output screen data in accordance with the default display setting content, updating the display setting content related to the output screen in accordance with the change instruction, and storing the identification information of the party A and the output screen into the first database in an associated manner, and in performing the process of electronic commerce executed by one of the user terminal of the party A and the party B in transactional relationship with the party A, identifying, in the first database, a display setting content of an output screen that corresponds to the process and that is associated with the identification information of the party A, retrieving transactional data related to the parties from the second database with respect to the process, setting the transactional data into the output screen in accordance with the identified display setting contents to generate output screen data, and sending the output screen data back to the user terminal of one of the party A and the party B.

In the screen customization supporting system, in accepting a change instruction for the display setting content related to the output screen from the user terminal, the control unit retrieves data items on the display setting content from the first database, transmits a specification accepting screen to the user terminal, the specification accepting screen being configured to accept, for each of the data items, specification of at least one of availability/unavailability of display of the item, a display order of the item, specification of multi-column display, necessity/unnecessity of input, and an item name in the output screen, accept the change instruction from the user terminal through the specification accepting screen, and execute a data update in the first database for the data item that is a change target indicated by the change instruction.

## Claims

1. A screen customization supporting system that is an information processing apparatus that manages display screens presented to parties involved in electronic commerce in an electronic commerce environment, the screen customization supporting system comprising:
a communication unit that communicates with a user terminal through a network, the user terminal capable of being used by each of the parties;
a storage unit storing a first database and a second database, the first database containing display setting content data for an output screen outputted to the user terminal in response to each of the processes of the electronic commerce, the second database containing transactional data generated in a process of the electronic commerce;
a control unit that executes the processes of:
in performing a process of electronic commerce executed by a user terminal of a party A, identifying a display setting content of an output screen corresponding to the process in the first database, retrieving transactional data related to the party A from the second database with respect to the process, setting the transactional data into the output screen in accordance with the identified display setting content to generate output screen data, and sending the output screen data back to the user terminal of the party A,
receiving, via the communication unit, a change instruction for the display setting content related to the output screen from the user terminal that is receiving and displaying the output screen data, updating the display setting content related to the output screen in accordance with the change instruction, and storing identification information of the party A and the output screen in the first database in an associated manner, and
in performing a process of electronic commerce executed by a user terminal of one of the party A and a party B in transactional relationship with the party A, identifying, in the first database, a display setting content of an output screen that corresponds to the process and that is associated with the identification information of the party A, retrieving transactional data related to the parties from the second database with respect to the process, setting the transactional data into the output screen in accordance with the identified display setting content to generate output screen data, and sending the output screen data back to the user terminal of one of the party A and the party B.

2. The screen customization supporting system of claim 1, wherein
the storage unit contains, in the first database, default display setting content data for output screens outputted to the user terminal depending on each of the processes of electronic commerce, and
wherein the control unit executes the processes of:
in performing the process of electronic commerce executed by the user terminal of the party A, identifying, in the first database, the display setting content of the output screen that corresponds to the process and that is associated with the identification information of the party A, in a case where the display setting content associated with the identification information of the party A is unidentifiable for the output screen corresponding to the process, identifying the default display setting content, retrieving transactional data related to the party A from the second database with respect to the process, setting the transactional data into the output screen in accordance with the identified default display setting contents to generate output screen data, and sending the output screen data back to the user terminal of the party A,
receiving, via the communication unit, a change instruction for the display setting content related to the output screen from the user terminal receiving and displaying the output screen data in accordance with the default display setting content, updating the display setting content related to the output screen in accordance with the change instruction, and storing the identification information of the party A and the output screen into the first database in an associated manner, and
in performing the process of electronic commerce executed by one of the user terminal of the party A and the party B in transactional relationship with the party A, identifying, in the first database, a display setting content of an output screen that corresponds to the process and that is associated with the identification information of the party A, retrieving transactional data related to the parties from the second database with respect to the process, setting the transactional data into the output screen in accordance with the identified display setting contents to generate output screen data, and sending the output screen data back to the user terminal of one of the party A and the party B.

3. The screen customization supporting system of claim 1 or 2, wherein
in accepting a change instruction for the display setting content related to the output screen from the user terminal, the control unit retrieves data items on the display setting content from the first database, transmits a specification accepting screen to the user terminal, the specification accepting screen being configured to accept, for each of the data items, specification of at least one of availability/unavailability of display of the item, a display order of the item, specification of multi-column display, necessity/unnecessity of input, and an item name in the output screen, accept the change instruction from the user terminal through the specification accepting screen, and execute a data update in the first database for the data item that is a change target indicated by the change instruction.

4. A screen customization supporting method capable of being performed by an information processing apparatus having a communication unit that communicates with another terminal, a storage unit storing a first database and a second database, the first database containing display setting content data for an output screen outputted to a user terminal in response to each of the processes of electronic commerce, the second database containing transactional data generated in a process of the electronic commerce, and a control unit , the information processing apparatus being configured to manage display screens presented to parties of the electronic commerce in an electronic commerce environment,
the method comprising:
in performing a process of electronic commerce executed by a user terminal of a party A, identifying a display setting content of an output screen corresponding to the process in the first database, retrieving transactional data related to the party A from the second database with respect to the process, setting the transactional data into the output screen in accordance with the identified display setting content to generate output screen data, and sending the output screen data back to the user terminal of the party A,
receiving, via the communication unit, a change instruction for the display setting content related to the output screen from the user terminal that is receiving and displaying the output screen data, updating the display setting content for the output screen in accordance with the change instruction, and storing identification information of the party A and the output screen in the first database in an associated manner, and
in performing a process of electronic commerce executed by a user terminal of one of the party A and a party B in transactional relationship with the party A, identifying, in the first database, a display setting content of an output screen that corresponds to the process and that is associated with the identification information of the party A, retrieving transactional data related to the parties from the second database with respect to the process, setting the transactional data into the output screen in accordance with the identified display setting contents to generate output screen data, and sending the output screen data back to the user terminal of one of the party A and the party B.
